# EUROPEAN PATENT SPECIFICATION

(11) **EP 4 244 104 B1**
(45) Date of publication and mention of the grant of the patent: **03.06.2026**
(21) Application number: 21819208.6
(22) Date of filing: 11.11.2021
(51) Int. Cl.: B60T 1/06, B60T 7/04, B60T 7/08, B60T 7/10, B60T 8/34, B60T 13/66, B60T 13/74

(54) **PARKING-BRAKING ASSEMBLY AND METHOD**
FESTSTELLBREMSANORDNUNG UND VERFAHREN
SYSTEME DE FREIN DE STATIONNEMENT ET PROCEDE

(30) Priority: 12.11.2020 IT 202000027071
(43) Date of publication of application: 20.09.2023
(73) Proprietor: Brembo S.p.A., 24035 Curno (Bergamo) (IT)
(72) Inventor: MILANESI, Andrea, 24035 Curno, Bergamo (IT); SZEWCZYK, Beniamin, 24035 Curno, Bergamo (IT); CIOTTI, Alessandro, 24035 Curno, Bergamo (IT); SALA, Paolo, 24035 Curno, Bergamo (IT)
(74) Representative: Crippa, Paolo Ernesto
(86) International application number: PCT/IB2021/060433
(87) International publication number: WO 2022/101814

(56) References cited:
- WO-A1-2018/078560
- US-A- 6 030 054
- US-A1- 2013 282 249
- US-A1- 2018 056 963
- US-A1- 2019 120 311
- US-A1- 2020 254 988
- US-A1- 2020 256 411

## Description

### . Field of the invention

**.** The present invention relates to the field of electric brakes and in particular of electric park brakes (EPB) of a vehicle, even more particularly of a motor vehicle. In greater detail, the present invention relates to an electronic device for selecting and routing electrical signals for operating the electro-actuated brake calipers of a brake apparatus, in particular a parking brake of a motor vehicle, even more particularly a motorcar.

### . Background art

**.** As known, the braking systems primarily serve two purposes: service braking and parking braking. The term "service braking" means any action on the braking system to apply braking or deceleration on a moving vehicle, including parking but under the command of the driver or an equivalent driver assistance system. In particular, "service braking" produces a vehicle deceleration which can be modulated and is reversible, because removing the command cancels the action. Conversely, the term "parking braking" means a braking action while the vehicle is stationary, usually but not necessarily off, and not under the command of the driver or the driver assistance system, e.g., the braking action of the vehicle while parked with no-one on-board. In other words, "parking braking" produces a force which prevents the vehicle from moving even after the command is removed, i.e. it is characterized by being irreversible. The removal of the force requires a specific release command. Both functions can be activated under the driver's command or the command of other driver assistance systems.

**.** Nowadays, electric park brakes (EPBs) are used on motor vehicles, in particular motorcars, to keep the vehicle stationary on both sloping and flat roads. The same function was accomplished in the past using a manual parking brake.

**.** Such electric park brakes involve the use of electro-actuated brake calipers, i.e. operated by electric motors dedicated to the parking brake function.

**.** The retaining mechanism of the electric park brake of a motorcar is activated by the driver acting on a button. As a result of such activation, an electronic control system activates the electric motors positioned on the calipers to advance the pistons which apply a bias on the respective pads, which abut on brake disc braking surfaces associated with the wheel of the motorcar and, consequently, stop its movement. As known, in most cases, the parking brake, either manual or EPB, acts on the rear axle wheels of the motorcar.

**.** In some cases, the brake calipers used to apply a parking brake action are specially made brake calipers which are separate from the brake calipers used to apply the service braking action. Indeed, since there are no moving masses, the energy involved in parking braking is decidedly less than the energy that 3 the service brake must apply.

**.** Usually, service brake calipers are known which are also used as parking brake calipers, e.g. as described in US3734248, US5343985, US2016167632, US5090518, US2009242338, US2014076672, US10525958, and US2019120311, and US6030054, US2018/056963, US2019/120311, WO2018/078560, US2013/282249.

**.** An electric park brake apparatus EPB involves the use of an electronic control unit (ECU) and an actuator adapted to act on the electric motors of the electro-actuated calipers. For this reason, EPB systems can be considered as a subset of braking systems operating with brake-by-wire (BBW) technology.

**.** To drive an electric motor for actuating an electro-actuated caliper of an EPB parking brake, it is known to use a dedicated power electronic circuit, e.g. an electronic circuit in a full-bridge transistor configuration (in case of driving using a circuit which includes solid-state components) or an electronic circuit using switching relays (in case of driving using a switch).

**.** In particular, the known and currently available EPB parking brake apparatuses are made according to two different implementation types:
- a first type of parking brake includes the use of a specific electronic control unit, or ECU, dedicated to it, which includes two power electronic circuits in a full-bridge transistor configuration, each of which can be used to drive an electric motor associated with a brake caliper;
- a second type of parking brake involves the use of two power electronic circuits in a full-bridge configuration with transistors either included or integrated into an ABS/ESP control unit which already equips the motorcar. Again, each full-bridge power circuit can be used to drive a single electric motor associated with a brake caliper.

**.** The search for new actuation solutions for an electric park brake applicable to brake calipers of the monobloc or floating type has recently led to the design of electro-actuated calipers which include two or more electric motors for each caliper, dedicated to the parking braking function.

**.** To be controlled, this type of caliper would require a new electronic control unit capable of driving four or more motors, or the use of a dedicated electronic control unit for each caliper, because the known apparatuses currently used to control the EPB only drive two electric motors.
The control of such calipers would, thus, require an overly complex and economically disadvantageous EPB electric park brake apparatus.

**.** First of all, the need to improve the braking action and in particular the parking braking action is still felt.

**.** Therefore, the need is strongly felt to control electro-actuated calipers which include two or more electric motors for each caliper, dedicated to the parking brake function of vehicles which makes it possible to overcome the limitations and drawbacks of the known solutions mentioned above.

**.** The need is also felt to avoid the anomalous behavior of the brake caliper when it is also used as a parking brake caliper. For example, the need is felt when the caliper has more than one electric motor actuating the caliper to ensure that the resulting action on the pad does not result in "skewing" of the pad itself, i.e. the action of the pad which results in its abnormal movement in its housing provided in the caliper body, generating among other matters, excessive dissymmetrical or asymmetrical loads on the brake caliper body.

### . Solution

**.** It is a first object of the present invention to devise and make available a parking-braking assembly of a vehicle according to claim 1 which makes is possible to solve the problems of the solutions of the prior art and also makes it possible to satisfy the felt needs.

**.** Some advantageous embodiments are the object of the dependent claims.

**.** The present invention further relates to a parking-braking method of a vehicle according to claim 7.

**.** Some advantageous embodiments are the object of the dependent claims.

**.** The analysis of these solutions showed that the making of a parking-braking assembly according to the invention (thus also present on the front calipers or the front axle of the vehicle) makes it possible to solve the problems of the known solutions and achieve the felt and remaining unmet needs. For example, the following benefits can be obtained as a result of the invention:
∘ preparing a brake assembly which can be used in autonomous driving vehicles;
∘ obtaining greater safety for off-road vehicles where it is not always possible to park with all the rear and/or front wheels on the ground and thus keep the parked vehicle braked and stationary;
∘ making it possible to park on higher slopes or alternatively obtain a reduction of the parking force required to the single actuator with consequent resizing and reducing the overall dimensions and weight of these assemblies which constitutes an unsprung weight of the vehicle which it is always desirable to minimize.

### . Figures

**.** Further features and advantages of the invention will become apparent from the description provided below of preferred exemplary embodiment thereof, given by way of non-limiting example, with reference to the accompanying drawings, in which:
- **figure 1** diagrammatically illustrates an example of an EPB parking brake apparatus comprising an electronic selecting and routing device of electrical signals for actuating electro-actuated brake calipers according to the present invention, connected between an electronic control unit of the EPB apparatus and electro-actuated brake calipers of a motor vehicle including two electric motors for each caliper;
- **figure 2** illustrates a time-dependent diagram of the control signals of electronic switches controlled in switching included in the electronic selecting and routing device in figure 1;
- **figure 3** diagrammatically shows a vehicle and, with greatly enlarged, separate parts, the two brake calipers, each of which of the monobloc type with four pistons and four independent electric motors, each associated respective front wheels, and the two floating brake calipers each with only one piston and the respective electric motor associated with the two rear wheels;
- **figure 4** again diagrammatically shows a second vehicle configuration and, with greatly enlarged, separate parts, two brake calipers, each of which of the floating type with two pistons and four independent electric motors, each associated with a respective front wheel, and the two floating brake calipers each with only one piston and the respective electric motor, each associated with each rear wheel;
- **figure 5** shows an axonometric view of a monobloc brake caliper associated with a brake disc with four pistons driven by four independent electric motors;
- **figure 6** shows an axonometric view of a floating brake caliper with two pistons driven by two independent electric motor-reducers;
- **figure 7** shows an axonometric view of a floating brake caliper with a single piston driven by an electric motor-reducer;
- **figure 8** shows an axonometric view of a hydraulic and electromechanical service and parking disc brake comprising a monobloc brake caliper with two hydraulically operated pistons (service brake) and two independent electric motors (parking brake);
- **figure 9** shows a section view of the brake caliper for disc brake in figure 8;
- **figure 10** shows an enlarged view of a detail in figure 9.

**.** Similar or equivalent elements in the aforesaid figures are indicated with the same reference numerals.

### Description of some preferred embodiments

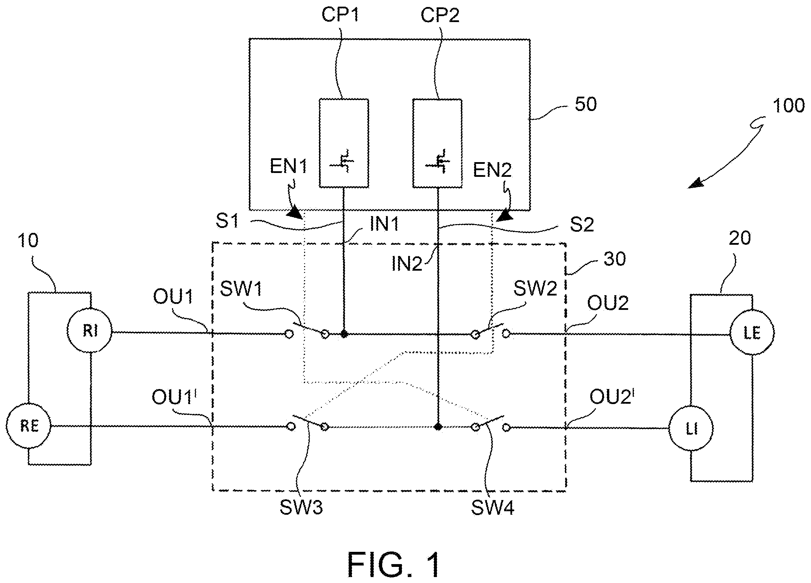

**.** With reference to figure 1, a simplified block diagram of a parking brake apparatus (Electric Park Brakes or EPB) of a motor vehicle, in particular a motorcar, according to the present invention is indicated by reference numeral 100 as a whole.

**.** In the present description, the term "stationary" is used to indicate that the motorcar is parked and with the engine off. In such conditions, the retaining mechanism of the electric park brake of a motorcar is activatable by the driver, e.g., by acting on a button. Following such activation, the brake calipers are actuated by the electric motors to apply the respective pads to the brake discs of the wheels of the motorcar and, consequently, block them.

**.** Similarly, the electric parking brake retaining mechanism is deactivated by the driver by pressing the button again.

**.** It is worth noting that the aforesaid parking-braking apparatus 100 is configured to implement the electric park brake function by employing components already included in the electro-actuated brake apparatus which equips the motorcar, including an electronic control unit 50 of the brake apparatus and electro-actuated brake calipers 10, 20 acting on the brake discs of the wheels of the motorcar.

**.** In the present invention, in particular, said electro-actuated brake calipers 10, 20 of the apparatus 100 may include one, two, or more electric motors for each caliper. Referring to the example in figure 1, each of the electro-actuated brake calipers 10, 20 comprise two electric motors. As known, each of such motors is adapted to actuate a respective piston (not shown in figure 1) which, by acting on one or another of the semi-calipers which make up each brake caliper 10, 20, determines the clamping of the caliper on the brake disc or, vice versa, the releasing from the disc.

**.** In particular, in the example of figure 1, the parking brake apparatus 100 comprises a first 10 and a second 20 electro-actuated brake caliper.
The first electro-actuated brake caliper 10 comprises, for example, a first RI and at least a further first RE electric motor. The second electro-actuated brake caliper 20 comprises, for example, a second LE and at least a further second LI electric motor.
In other words, each caliper 10, 20 comprises a first electric motor RI, LI adapted to act on the semi-caliper facing towards the inside of the motorcar, and a second electric motor RE, LE adapted to act on the semi-caliper facing towards the outside of the motorcar 2.

**.** In an example of embodiment the aforesaid first 10 and second 20 electro-actuated brake calipers are associated with the wheels of the rear axle 5 of the motorcar 2.

**.** In a different example of embodiment, the aforesaid first 10 and second 20 electro-actuated brake caliper are associated with the wheels of the front axle 6 of the motorcar 2.

**.** These solutions are both equivalently applicable to keep the vehicle stationary on both sloping and flat roads.

**.** In yet a different example of embodiment, the first electro-actuated brake caliper 10 is associated with a wheel of the rear axle 5 of the motorcar, and the second electro-actuated brake caliper 20 is associated with a wheel of the front axle 6 of the motorcar 2.

**.** Such a configuration is particularly advantageous because it makes it possible to keep the motorcar stationary if it is parked on uneven roads which have different slopes at the wheels of the rear and front axle.

**.** Furthermore, the parking brake apparatus 100 comprises the aforesaid electronic control unit 50 (or ECU), which comprises, for example, a microcontroller or microprocessor, configured to generate a first S1 and a second S2 electrical signal for actuating the electro-actuated brake calipers 10, 20.

**.** Hereafter, reference will be made in general to the aforementioned electric actuation signals S1, S2, meaning that such signals can indifferently actuate the electric motors (and the respective pistons) to determine the clamping of the caliper on the brake disc, or vice versa, the release from the disc.

**.** In an example of embodiment, such an electronic control unit 50 is embodied in a dedicated electronic control unit which includes a first CP1 and a second CP2 power electronic circuit, e.g. in a full-bridge transistor configuration, configured to generate the first S1 and the second S2 electrical signal, respectively, for actuating the electro-actuated brake calipers 10, 20.

**.** In a different example of embodiment, such an electronic control unit 50 is embodied in an ABS/ESP control unit which already equips the motorcar. In such a case, the use of a first CP1 and a second CP2 additional power electronic circuit is included, e.g. in a full-bridge transistor configuration, either included or integrated into said ABS/ESP control unit and adapted to generate the first S1 and the second S2 electrical signal for actuating the electro-actuated brake calipers 10, 20.

**.** Furthermore, the parking brake apparatus 100 of the invention advantageously comprises an electronic device 30 for selecting and routing the electrical signals for actuating the electro-actuated brake calipers 10, 20 of the apparatus.

**.** In particular, said electronic device 30 comprises a first IN1 and a second IN2 input for receiving the aforesaid first S1 and second S2 electrical drive signal generated by the electronic control unit 50.

**.** Furthermore, the electronic device 30 comprises:
- a first OU1 and at least a further first OU1' output connected to the first RI and the at least a further first RE electric motors, respectively, of the first electro-actuated brake caliper 10;
- a second OU2 and at least a further second OU2' output connected to the second LE and the at least a further second LI electric motors, respectively, of the second electro-actuated brake caliper 20.

**.** Furthermore, the electronic device 30 of the invention comprises electronic connection means SW1, SW2, SW3, SW4 which can be controlled to assume an open state and a closed state.
In particular, when the parking brake apparatus 100 is deactivated, said electronic connecting means SW1, SW2, SW3, SW4 are controlled to assume the open state. Thus, the first IN1 and second IN2 inputs are isolated from the aforesaid outputs OU1, OU1', OU2, OU2'.
Instead, when the parking brake apparatus 100 is activated, said electronic connection means SW1, SW2, SW3, SW4 are selectively controlled to switch from the open state to the closed state to connect the aforesaid first IN1 and second IN2 input of the device 30 to any two of: first output OU1, second output OU2, at least one further first output OU1' and at least one further second output OU2'.
In this manner, the electrical actuation signals S1, S2 are routed towards the selected electric motors of the electro-actuated brake calipers.

**.** In an example of embodiment provided by way of a non-limiting example of the present invention, the aforesaid electronic switching means comprise a first SW1, a second SW2, at least a third SW3, and at least a fourth SW4 switch controlled in switching.

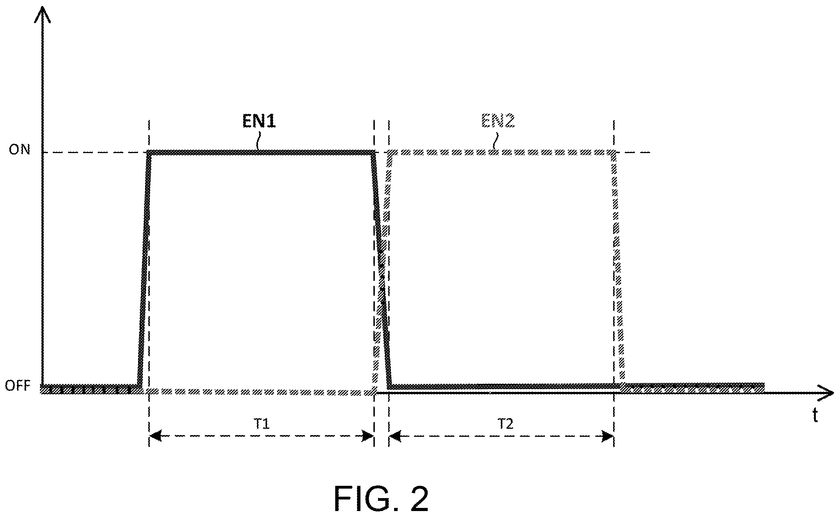

**.** In particular, said electronic switches are controllable in switching based on a first EN1 and a second EN2 control signal generated by the electronic control unit 50 and having time trends shown, for example, in figure 2.

**.** In the example in figure 1, the parking brake apparatus 100 comprises two calipers, and each of those calipers includes two electric motors. Therefore, the selecting and routing device 30 comprises a total of four electronic switches.
However, the teachings of the present invention are also applicable to the case of brake apparatuses employing calipers each of which comprises more than two electric motors. The person skilled in the art can modify the number and configuration of the electronic switches of the selecting device 30 so that the two actuation signals S1, S2 are always routed to any two of these motors.

**.** In the example of embodiment in figure 1, the first control signal EN1 is adapted to act at the same time on the first SW1 and the fourth SW4 switch, the second control signal EN2 can act at the same time on the second SW2, and the third SW3 switch.

**.** In such an example of embodiment, when the parking brake apparatus 100 is activated:
said first SW1 and the fourth SW4 switches are controlled by means of the first control signal EN1 to switch from the open state to the closed state to connect, during a first time interval T1, the first input IN1 to the first output OU1 of the device 30 and to connect the second input IN2 to said at least a further second output OU2', respectively.
In this case, the second SW2 and third SW3 switches are controlled by the second EN2 control signal to assume the open state.

**.** In the same example, when the parking brake apparatus 100 is activated, at the end of the first time interval T1:
the first SW1 and fourth SW4 switches are controlled by the first EN1 control signal to switch from the closed state to the open state,
the second SW2 and the third SW3 switches are controlled by the second control signal EN2 to switch from the open state to the closed state to connect, during a second time interval T2 following the first time interval T1, the first input IN1 to the second output OU2 of the device 30 and to connect the second input IN2 to said at least a further first output OU1', respectively.

**.** In a different example of embodiment, not shown in figure 1, the first control signal EN1 can act at the same time on the first SW1 and the third SW3 switch, the second control signal EN2 is adapted to act at the same time on the second SW2 and the fourth SW4 switch.

**.** In such an example of embodiment, when the parking brake apparatus 100 is activated:
said first SW1 and third SW3 switches are controlled by means of the first control signal EN1 to switch from the open state to the closed state to connect, during a first time interval T1, the first input IN1 to the first output OU1 of the device 30 and to connect the second input IN2 to said at least a further first output OU1', respectively;
the second SW2 and the fourth SW4 switches are controlled to assume the open state.

**.** In the same example, when the parking brake apparatus 100 is activated, at the end of the first time interval T1:
the first SW1 and the third SW3 switches are controlled to switch from the closed state to the open state,
said second SW2 and fourth SW4 switches are controlled to switch from the open state to the closed state to connect, during a second time interval T2 following the first time interval T1, the first input IN1 to the second output OU2 of the device 30 and to connect the second input IN2 to said at least a further second output OU2', respectively.

**.** In view of the above, the electronic device 30 for selecting and routing the input signals IN1, IN2 is adapted to operate as a demultiplexer on such signals.

**.** In the aforesaid examples of embodiment shown above, the first EN1 and the second EN2 control signals are, for example, square wave signals having the same frequency, but mutually shifted by 180°.

**.** In such a case, the first T1 and second T2 time intervals are equal to each other and coincide with a half-period of such square wave signals.

**.** The duration of this semi-period is fixed and, for example, is in the range 10 msec - 100 msec.

**.** In a yet different example of embodiment, the first EN1 control signal coincides with the second EN2 control signal. In other words, the first SW1 and fourth SW4 switches are controlled to assume the closed state at the same time as the second SW2 and third SW3 switches.

**.** In such a case, when the parking brake apparatus 100 is activated, the first SW1, second SW2, third SW3, and fourth SW4 switch are controlled to switch from the open state to the closed state and remain closed at the same time during a third time interval T3 (not shown in the figures). Thus, the first input IN1 is connected at the same time to the first OU1 and the second OU2 output, and the second input IN2 is connected at the same time to the at least one further first OU1' and the at least one further second OU2' output.

**.** In particular, the Applicant has verified that by introducing the electronic device 30 for selecting and routing electric actuation signals described above, it is possible to effectively drive two electro-actuated brake calipers each including at least two electric motors employing the same electronic control unit 50 already provided in the electro-actuated brake control apparatus, without excessively increasing the complexity of the brake apparatus.

**.** Furthermore, the electronic selection and routing device 30 can be used to alternately drive the electric motors of any two brake calipers of the parking brake apparatus EPB. For example, it is possible to control the operation of the motors RI, LI facing towards the inside of the motorcar firstly and then the motors RE, LE facing towards the outside of the vehicle. Alternatively, the electronic selecting and routing device 30 makes it possible to drive one inner and one outer motor.

**.** Furthermore, with the electronic selecting and routing device 30 it is possible to drive the motors of the same caliper and then the motors of the other caliper at the same time.

**.** Furthermore, the electronic selecting and routing device 30 makes it possible to drive the electric motors of the two brake calipers for time intervals T1, T2 of pre-set duration, comprised from a few tens of milliseconds to hundreds of milliseconds. In this manner, a more uniform piston advancement can be produced.

**.** The present invention further relates to a motor vehicle which comprises an electro-actuated brake apparatus 100 according to any one of the embodiments described above.

**.** The aforementioned electronic control unit 50 stores in a respective memory application software configured to implement the method which implements the control logic of the present invention. Such application software is implemented, in particular, by means of functional blocks.

**.** In an example of embodiment, the parking-braking method of the vehicle 2 comprising the steps of:
- providing at least a first electro-actuated brake caliper 10 associated with a first wheel 3 of the vehicle 2;
- providing at least a second electro-actuated brake caliper 20 associated with a second wheel 4 of the vehicle 2;
- providing an electronic device 30 for selecting and routing electrical signals, said device comprising:
   - a first IN1 and a second IN2 input to receive electrical signals S1, S2 for actuating electro-actuated brake calipers, 10, 20;
   - a first OU1 and at least a further first OU1' output connected to a first RI and at least a further first RE electric motor, respectively, of such at least a first electro-actuated brake caliper 10;
   - a second OU2 and at least a further second OU2' output connected to a second LE and at least a further second LI electric motor, respectively, of such at least a second electro-actuated brake caliper 20.

**.** The method is characterized in that it comprises the further step of selectively routing, by the electronic device 30, the aforesaid electrical actuation signals S1, S2 towards any two of said: first output OU1, second output OU2, at least a further first output OU1' and at least a further second output OU2' to activate the electric motors of both said at least a first brake caliper 10 and said at least a second brake caliper 20 to generate a parking braking action on the vehicle 2.

**.** In an example of embodiment, the method further comprises the steps of:
- applying an at least temporary parking braking action with: the first RI and at least further first RE electric motors of the at least a first electro-actuated brake caliper 10, second LE, and at least further second LI electric motors of the at least a second electro-actuated brake caliper 20;
- applying a permanent parking braking action, i.e., until deactivation by the user, with at least one of said first RI, at least a further first RE, second LE, and at least a further second LI electric motors to generate a parking braking action on the vehicle 2.

**.** In an example of embodiment, the method comprises:
- defining a first amount of a temporary braking action F1, i.e. a first braking force;
- defining a second amount of a permanent braking action F2, i.e. a second braking force.

**.** Such a first amount of a temporary braking F1 is less than the second amount of a permanent braking action F2.

**.** In a first example of embodiment, the aforesaid step of applying an at least temporary parking braking action comprises the further steps of:
- activating, during a first interval of time T1, the first RI and said at least further second LI electric motors to apply said first amount of temporary braking action F1 to the first 10 and second 20 electro-actuated brake calipers;
- keeping deactivated, during the first time T1, the at least further RE and said second LE electric motors;
- activating, during a second interval of time T2 following and equal to the first time interval T1, the at least further first RE and the second LE electric motors to apply said first amount of temporary braking action F1 to the first 10 and second 20 electro-actuated brake calipers;
- keeping deactivated, during the second time interval T2, the first RI, and the at least further second electric motor LI.

**.** In an example of embodiment, the step of applying a permanent parking braking action comprises the further step of activating, until the deactivation by the user, at least one of the aforesaid first RI, at least a further first RE, second LE, and at least a further second LI electric motors to apply said second amount of permanent braking action F2 to the first 10 or second 20 electro-actuated brake caliper or both to generate a parking braking action on the vehicle 2.

**.** Furthermore, it is provided to release the temporary parking braking action only from the electric motors not concerned by said permanent parking braking action.

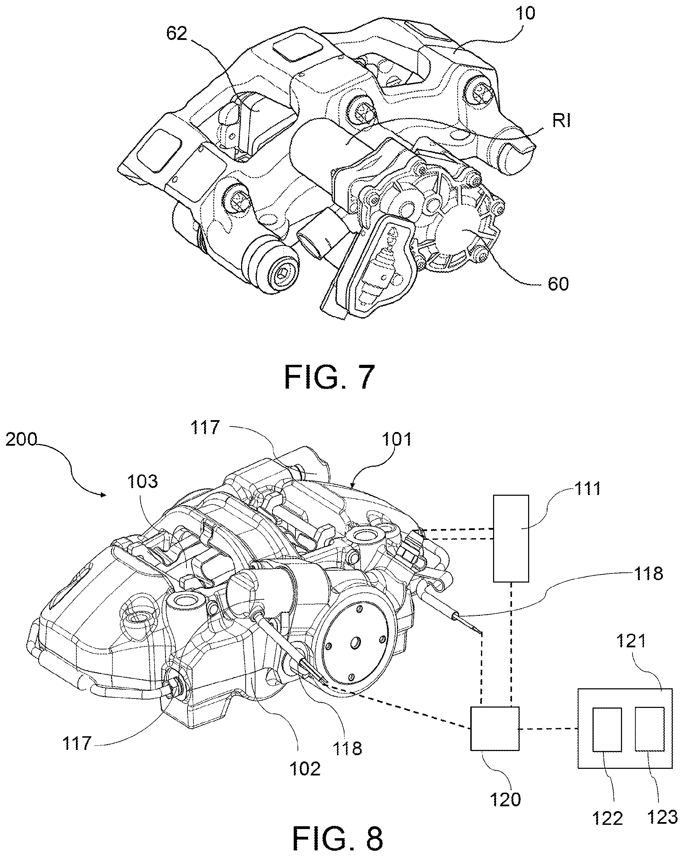

**.** Referring to figures 8, 9, and 10, an example of a hydraulic and electromechanical service and parking disc brake 200 comprising a monobloc brake caliper 101 is described. Such a brake caliper 101 comprises two pistons actuated by two electric motors 117 controllable by an electronic control unit 120. Such an electronic control unit 120, which substantially corresponds to the electronic unit 50 described above, can control the electric motors 117 through the electronic routing device 30 suggested by the present invention.

**.** Although a monobloc hydraulic and electromechanical disc brake caliper 101 with two electric motors is shown in figure 8, the present invention may also advantageously be applied to hydraulic and electromechanical disc brake calipers having a greater number of pistons, e.g. four or six pistons and, possibly a corresponding greater number of electric actuating motors.

**.** The hydraulic and electromechanical service and parking disc brake 200 comprises the caliper 101 with two side walls 102 which mutually delimit a disc space 103 for accommodating a portion of a brake disc 104.

**.** Furthermore, the disc brake 200 comprises means for fixing the caliper 101 to the suspension of a vehicle and at least two pads 105 each supported to one of the side walls 102, respectively.

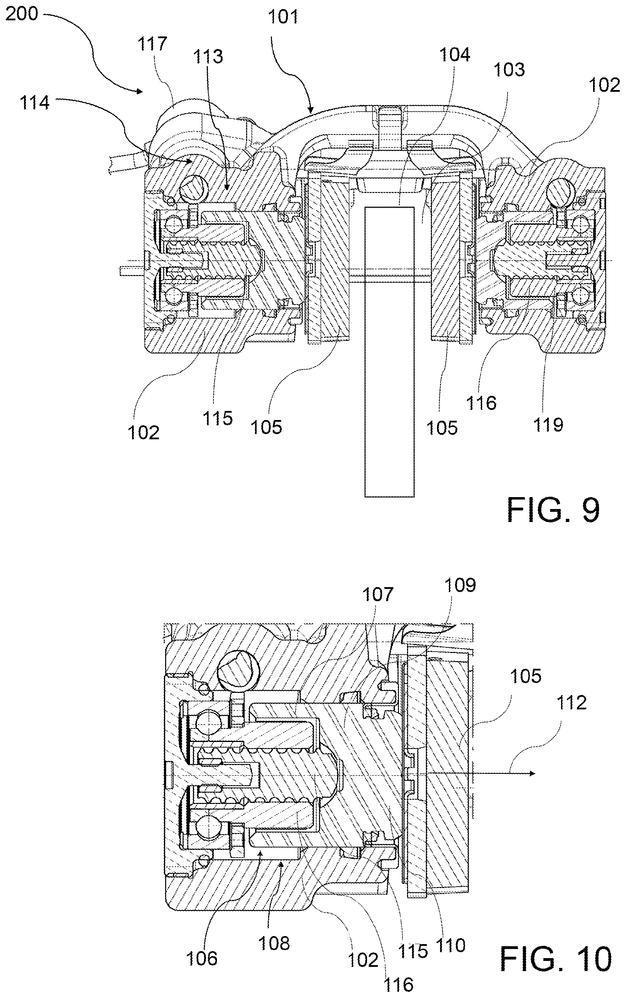

**.** The disc brake 200 comprises a service braking system 106, having at one hydraulic actuator 107 positioned in each of the side walls 102. Each of the two hydraulic actuator 107 shown in figure 9 comprises a hydraulic cylinder 108 formed in the side wall 102 and a piston 109 accommodated in the hydraulic cylinder 108 and having a free end 110 facing the pad 105.

**.** Such a hydraulic cylinder 108 is in communication with a system 111 for feeding and pressurizing a hydraulic fluid for applying hydraulic pressure to the piston 109 and causing the piston 109 to translate in an actuating direction 112 towards the brake disc 104 and clamp the pad 105 against the brake disc 104.

**.** Furthermore, the disc brake 200 comprises a parking braking system 113 having an electromechanical actuator 114 positioned in each of the side walls 102, respectively. The caliper 101 comprises two electro-mechanical actuators 114.

**.** Each electromechanical actuator 114 comprises a screw-nut assembly 115, 116 having a rotary member 116 and a translational member 115 and configured to convert a rotary motion of the rotary member 116 into a translational motion of the translational member 115.

**.** The screw-nut assembly 115, 116 is connected in the hydraulic cylinder 108 to translate and tighten the translational member 115 in the actuating direction 112 against the piston 109 to lock it.

**.** The two electric motors 117 of the disc brake 200 are each connected to a power supply 118 to actuate the screw-nut assembly 115, 116 associated with each piston. The disc brake 200, further comprises transmission mechanism 119 connected between the electric motor 117 and the rotary member 116.

**.** It is worth noting that the electromechanical actuator 114 is self-locking due to a transmission irreversibility thereof so that, when the electric motor 117 is off, a translational stress of the translational member 115 cannot cause the translational member 115 to move away from the brake disc 104.

**.** According to an alternative embodiment, e.g. if the caliper is a so-called floating caliper, the parking braking system 113 may comprise a single electromechanical actuator 114 positioned at only one of the side walls 102 which can be activated to block the pads 105 against the brake disc 104. In this case, the single electromechanical actuator 114 can be configured as described above.

**.** The electronic control unit 120 of a disc brake 200 is connected to the service braking system 106 and to brake the parking braking system 113 and a user interface 121. Such a user interface 121 comprises, for example, a user interface 122, having, for example, a service braking control interface, e.g. a service pedal or a service button or a service lever, and a parking braking control interface 123, e.g. a parking pedal or a parking button or a parking lever.

**.** Such a control unit 120 may comprise an electric, electromechanical, electro-hydraulic and/or electronic control system suited to control the pressurization of the hydraulic fluid and the drive of the electric motor 117. Such a control unit 120 is configured and/or programmed to perform the control functions of the brake 200 in the desired manner.

**.** In the case of the hydraulic and electromechanical service and parking disc brake 200 comprising the brake caliper 101 in figures 8-10, a step of defining a pressure target value in the hydraulic circuit of the caliper 101 is provided before the steps of controlling described above.

**.** It is worth noting that the hydraulic pressure can be generated by hydraulic modulators on the vehicle, e.g., stability control (ESC) modulators, or electric power brakes, or electro-hydraulic actuators hydraulically connected to the caliper.

**.** In particular, in response to a parking brake user command, the control unit 120 is configured to actuate:
- the service braking system 106 to move the piston 109 in the actuating direction 112 towards the brake disc 104 in a parking position in which it clamps the pad 105 against the brake disc 104, and
- the parking braking system 113 for locking the piston 109 in the parking position and for preventing a return movement of the piston 109.

**.** In response to the parking brake user command, the control unit 120 is configured for:
- actuating the service braking system 106 by moving the piston 109 to the parking position in which it pushes the pad 105 against the brake disc 104;
- when the target pressure is reached in the hydraulic circuit of the caliper 101, actuating the electric motor 117 in a forward direction upon the actuation of the service braking system 106 and with the piston 109 already in the parking position, by translating a translational member 115 in the actuating direction 112 against the piston 109 to lock it in the parking position and prevent a return movement thereof;
- once the piston 109 has been locked in the parking position, deactivating the service braking system 106 by reducing the pressure of the hydraulic fluid, and turning the electric motor 117 off.

**.** In this manner, the piston 109 remains locked due to the transmission irreversibility of the electromechanical actuator 114.

**.** In response to a user command to release the parking condition, the control unit 120 is configured for:
- firstly actuating the hydraulic actuator 107 to provide pressure on the piston 109 and unloads the screw-nut assembly 115, 116 of the electromechanical actuator 114;
- when the screw-nut assembly 115, 116 is unloaded, actuating the electromechanical actuator 114 to detach the translational member 115 from the piston 109;
- when the translational member 115 is detached from the piston 109, actuating the hydraulic actuator 107 to lower the hydraulic pressure again and interrupt the parking.

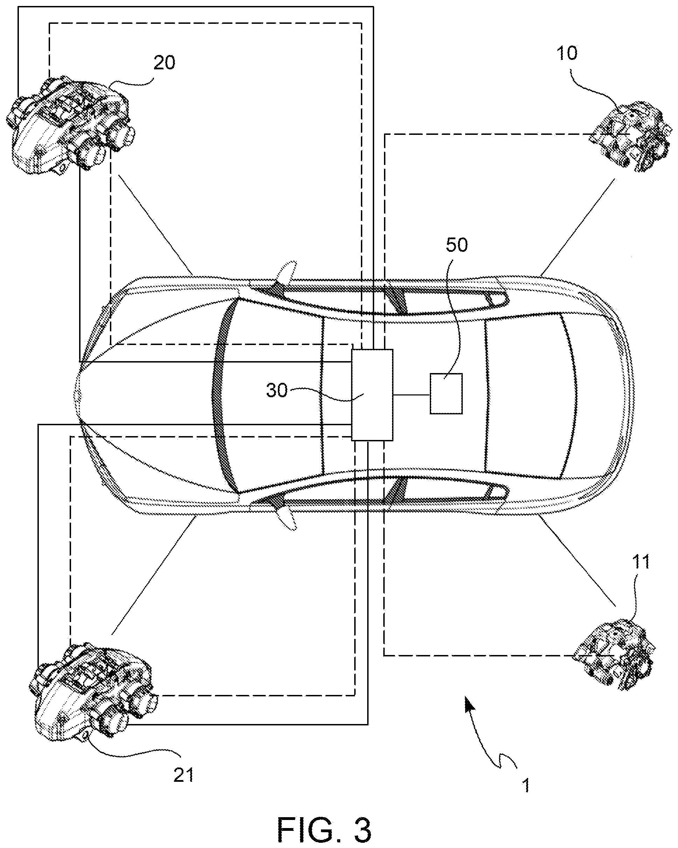

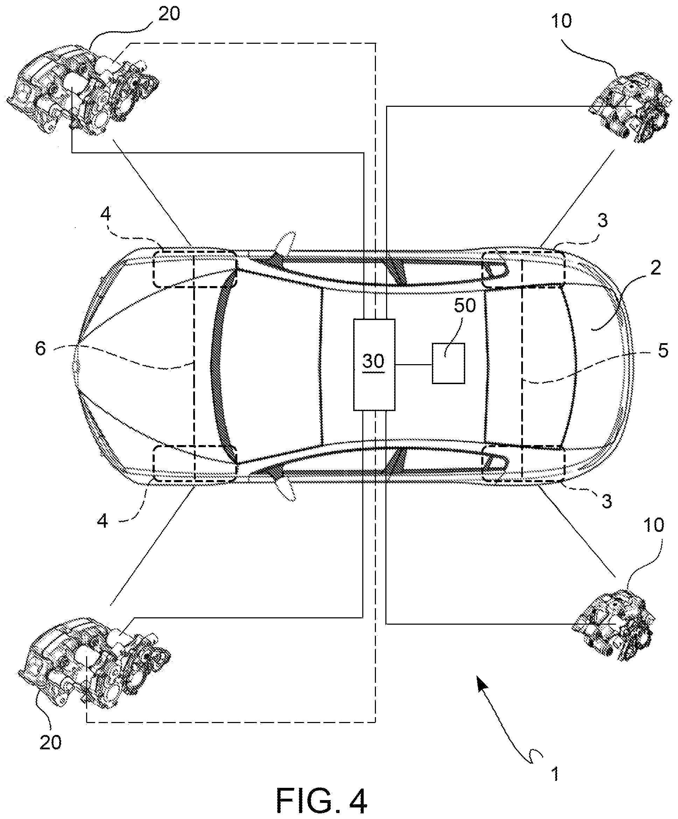

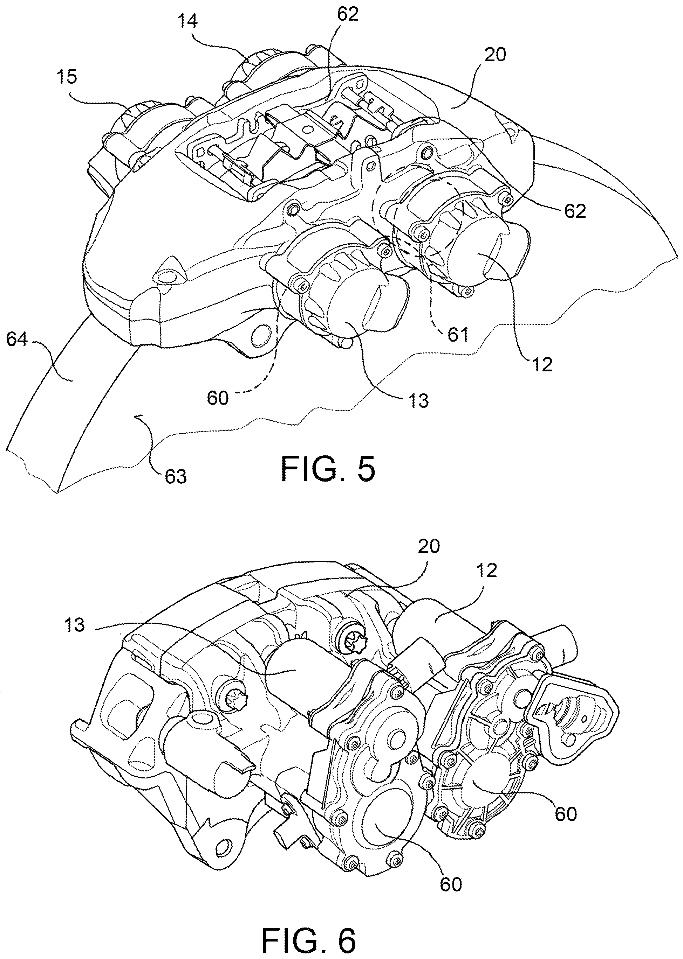

**.** A possible parking-braking assembly according to the invention is described below with reference to figures 3-7.

**.** According to a general embodiment, a parking-braking assembly 1 of a vehicle 2 comprises at least a first brake caliper 10 associated with a wheel 3 of the rear axle 5 of vehicle 2.

**.** Furthermore, said assembly comprises at least one further first brake caliper 11 associated with a wheel 4 of the front axle 6 of said vehicle 2.

**.** In an example of embodiment, all the brake calipers 10, 11, 20, 21 of the braking system 1 of the vehicle 2 are electro-actuated brake calipers to avoid hydraulic braking devices and circuits on the vehicle 2.

**.** In a different example of embodiment, the brake calipers of the braking system 1 of the vehicle 2 comprise both electro-actuated brake calipers and hydraulic and electromechanical service and parking brake calipers 101 similar to that described with reference to figures 8-10.
Although reference is made hereafter to the example of embodiment in which all vehicle brake calipers 2 are electro-actuated calipers, the properties of the invention are also applicable to hydraulic and electromechanical service and parking brake calipers 101.

**.** With further advantage, both said brake caliper 10 and said further first brake caliper 11 are at least also parking brake calipers.

**.** According to an embodiment, said system 1 comprises an electronic control unit 50 configured to generate a first S1 and a second S2 electrical parking command signal to actuate said electro-actuated brake calipers 10, 11, 20, 21.

**.** According to an embodiment, said electro-actuated brake calipers 10, 11, 20, 21 and/or said electronic control unit 50 are configured to apply a constant parking action on the vehicle 2 also when the vehicle is parked.

**.** According to an embodiment, said electro-actuated brake calipers 10, 11, 20, 21 and/or said electronic control unit 50 are configured to apply a constant parking action on the vehicle 2 also when the vehicle is parked and off.

**.** According to an embodiment, each electro-actuated caliper 10, 11, 20, 21 comprises at least one electric motor RI, RE, LE, LI, 12, 13, 14, 15 which acts, either directly or by means of a reduction gear 60, on a piston 61 which biases a brake pad 62, which, during the braking action, abuts against a braking surface 63 of a brake disc 64.

**.** Alternately, said at least one electric motor RI, RE, LE, LI, 12, 13, 14, 15 comprises a motor locking device 65 (not shown in the figures) which acts by blocking the movement of the electric motor when the electric motor RI, RE, LE, LI, 12, 13, 14, 15 with the vehicle 2 stopped; or said reducer 60 is an irreversible reducer, i.e. it allows a movement of the piston 61 if it is actuated by the electric motor RI, RE, LE, LI, 12, 13, 14, 15, but it does not allow the piston 61 to retract with the sole bias of the brake pad 62 on which said piston acts.

**.** According to an embodiment, at least one second brake caliper 20 is associated with a wheel 3 of the rear axle 5 of said vehicle 2.

**.** The at least one further second brake caliper 21 is associated with a wheel 4 of the front axle 6 of said vehicle 2.

**.** All four brake calipers 10, 11, 20, 21 of the braking system 1 of the vehicle 2 are electro-actuated brake calipers.

**.** At least one electro-actuated brake caliper 10 or 11 of said rear axle 5 and at least one electro-actuated brake caliper 20 or 21 of said front axle 6 are at least also parking brake calipers of said vehicle 2.

**.** According to an embodiment, at least two electro-actuated brake calipers 10 and 11 of said rear axle 5 and at least two electro-actuated brake calipers 20 and 21 of said front axle 6 are at least also parking brake calipers of the vehicle 2.

**.** According to an embodiment, at least one electro-actuated caliper 10, 11, 20, 21 comprises at least two electric motors RI, RE, LE, LI, 12, 13, 14, 15.

**.** At least one of said at least two electric motors RI, RE, LE, LI, 12, 13, 14, 15 generates a parking action of the vehicle 2.

**.** According to an embodiment, said rear axle 5 comprises two opposite rear wheels 3 and each rear wheel 3 cooperates with at least one rear axle electro-actuated caliper 10, 11.

**.** Each of said electro-actuated calipers 10, 11 comprises at least two electric motors RI, RE, LE, LI.

**.** At least one of said at least two electric motors RI, RE, LE, LI of each of said electro-actuated calipers 10, 11 generates a parking action of the vehicle 2.

**.** According to an embodiment, said front axle 6 comprises two opposite front wheels 4 and each front wheel 4 cooperates with at least one front axle electro-actuated caliper 20, 21.

**.** Each of said electro-actuated calipers 20, 21 comprises at least two electric motors 12, 13, 14, 15.

**.** At least one of said at least two electric motors 12, 13, 14, 15 of each of said electro-actuated calipers 20, 21 generates a parking action of the vehicle 2.

**.** According to an embodiment, at least one electro-actuated caliper 10, 11, 20, 21 comprises at least two electric motors RI, RE, LE, LI, 12, 13, 14, 15.

**.** Both said at least two electric motors RI, RE, LE, LI, 12, 13, 14, 15 generate an at least temporary parking action of the vehicle 2.

**.** According to an embodiment, said front axle 6 comprises two opposite front wheels 4 and each front wheel 4 cooperates with at least one front axle electro-actuated caliper 20, 21.

**.** Each of said electro-actuated calipers 20, 21 comprises at least two electric motors 12, 13, 14, 15.

**.** Both said at least two electric motors 12, 13, 14, 15 of each of the said electro-actuated calipers 20, 21 generate an at least temporary parking action of the vehicle 2.

**.** According to an embodiment, said rear axle 5 comprises two opposite rear wheels 3 and each rear wheel 3 cooperates with at least one rear axle electro-actuated caliper 10, 11.

**.** Each of said electro-actuated calipers 10, 11 comprises at least two electric motors RI, RE, LE, LI.

**.** Both said at least two electric motors RI, RE, LE, LI of each of said electro-actuated calipers 10, 11 generates an at least temporary parking action of the vehicle 2.

**.** According to an embodiment, said front axle 6 comprises two opposite front wheels 4 and each front wheel 4 cooperates with at least one front axle electro-actuated caliper 20, 21.

**.** Said front axle electro-actuated calipers 20, 21 are floating calipers.

**.** Said front axle electro-actuated calipers 20, 21 each comprise two electric motors 12, 13, 14, 15.

**.** At least one of said at least two electric motors 12, 13, 14, 15 of each of said electro-actuated calipers 20, 21 generates a parking action of the vehicle 2.

**.** According to an embodiment, said front axle 6 comprises two opposite front wheels 4 and each front wheel 4 cooperates with at least one front axle electro-actuated caliper 20, 21.

**.** Said electro-actuated calipers 20, 21 of the front axle are one-piece calipers or fixed with respect to a support thereof, such as a vehicle stub axle.

. Said front axle electro-actuated calipers 20, 21 each comprise two opposed pairs of electric motors 12, 13, 14, 15.

**.** At least two of said electric motors 12, 13, 14, 15, arranged opposite to each other, of each of said electro-actuated calipers 20, 21 generates a parking action of the vehicle 2.

**.** According to an embodiment, said rear axle 5 comprises two opposite rear wheels 3 and each rear wheel 3 cooperates with at least one rear axle electro-actuated caliper 10, 11.

**.** Said rear axle electro-actuated calipers 10, 11 are floating calipers.

**.** Said rear axle electro-actuated calipers 10, 11 each comprise a single electric motor RI, RE, LE, LI.

**.** Said electric motor RI, RE, LE, LI of each of said electro-actuated calipers 10, 11 generates a parking action of the vehicle 2.

**.** A procedure for activating the parking brake assembly will be described below.

**.** According to a general embodiment, a parking-braking method of a vehicle 2 comprises the following steps:
- providing at least one electro-actuated first brake caliper 10 associated with a wheel 3 of the rear axle 5 of said vehicle 2;
- providing at least one further electro-actuated first brake caliper 11 associated with a wheel 4 of the front axle 6 of said vehicle 2;
- avoiding hydraulic braking devices and circuits on the vehicle 2;
- applying a parking-braking action with both said brake caliper 10 and said further first brake caliper 11 to generate a parking-braking action on said vehicle 2.

**.** According to a further embodiment, the method includes the following steps:
- providing two opposite rear wheels 4 in said front axle 6, wherein and each front wheel 4 cooperates with at least one front axle electro-actuated caliper 20, 21;
- providing two opposite rear wheels 3 in said rear axle 5, wherein each rear wheel 3 cooperates with at least one rear axle electro-actuated caliper 10, 11;
- applying a parking-braking action with all the electro-actuated calipers 20, 21 on the front axle and all the electro-actuated calipers 10, 11 on the rear axle.

**.** According to a further embodiment, the method includes the following steps:
- providing at least two electric motors RI, RE, LI, LE, 12, 13, 14, 15 for each electro-actuated caliper 10, 11, 20, 21;
- applying a parking-braking action with at least one of said at least two electric motors RI, RE, LI, LE, 12, 13, 14, 15 to generate a parking-braking action on said vehicle 2.

**.** According to a further embodiment, the method includes the following steps:
- providing at least two electric motors RI, RE, LI, LE, 12, 13, 14, 15 for each electro-actuated caliper 10, 11, 20, 21;
- applying an at least temporary parking-braking action with said at least two electric motors RI, RE, LI, LE, 12, 13, 14, 15;
- applying a permanent parking-braking action, i.e. until it is deactivated by the user, with at least one of said at least two electric motors RI, RE, LI, LE, 12, 13, 14, 15 to generate a parking-braking action on said vehicle 2.

**.** According to a further embodiment, the method includes the following steps:
- providing at least two electric motors RI, RE, LI, LE, 12, 13, 14, 15 for each electro-actuated caliper 10, 11, 20, 21;
- applying an at least temporary parking-braking action with said at least two electric motors RI, RE, LI, LE, 12, 13, 14, 15;
- applying a permanent parking-braking action, i.e. until it is deactivated by the user, with at least one of said at least two electric motors RI, RE, LI, LE, 12, 13, 14, 15 to generate a parking-braking action on said vehicle 2;
- releasing the temporary parking braking action only from electric motors RI, RE, LI, LE, 12, 13, 14, 15 not concerned by said permanent parking braking action.

**.** According to a further embodiment, the method includes the following steps:
- defining a first amount of a temporary braking F1;
- defining a second amount of a permanent braking F2;
- providing at least two electric motors RI, RE, LI, LE, 12, 13, 14, 15 for at least one electro-actuated caliper 10, 11, 20, 21;
- applying said temporary parking-braking action F1 with said at least two electric motors RI, RE, LI, LE, 12, 13, 14, 15;
- applying said permanent parking-braking action F2, i.e. until it is deactivated by the user, with at least one of said at least two electric motors RI, RE, LI, LE, 12, 13, 14, 15 to generate a parking-braking action on said vehicle 2;
- releasing the temporary parking braking action F1 only from electric motors RI, RE, LI, LE, 12, 13, 14, 15 not concerned by said permanent parking braking action.

**.** According to a further embodiment, the method includes the following steps:
- defining a first amount of a temporary braking F1;
- defining a second amount of a permanent braking F2;
- wherein said first entity of a temporary braking action F1 is defined as equal to half the second entity of a permanent braking action F2;
- providing at least two electric motors RI, RE, LI, LE, 12, 13, 14, 15 for at least one electro-actuated caliper 10, 11, 20, 21;
- applying said temporary parking-braking action F1 with said at least two electric motors RI, RE, LI, LE, 12, 13, 14, 15;
- applying said permanent parking-braking action F2, i.e. until it is deactivated by the user, with at least one of said at least two electric motors RI, RE, LI, LE, 12, 13, 14, 15 to generate a parking-braking action on said vehicle 2;
- releasing the temporary parking braking action F1 only from electric motors RI, RE, LI, LE, 12, 13, 14, 15 not concerned by said permanent parking braking action.

**.** According to a further embodiment, the method includes the following steps:
- defining a first amount of a temporary braking F1;
- defining a second amount of a permanent braking F2;
- providing at least two electric motors RI, RE, LI, LE, 12, 13, 14, 15 for at least one electro-actuated caliper 10, 11, 20, 21;
- applying said temporary parking-braking action F1 with said at least two electric motors RI, RE, LI, LE, 12, 13, 14, 15;
- applying said permanent parking-braking action F2, i.e. until it is deactivated by the user, with at least one of said at least two electric motors RI, RE, LI, LE, 12, 13, 14, 15 to generate a parking-braking action on said vehicle 2;
- releasing the temporary parking braking action F1 only from electric motors RI, RE, LI, LE, 12, 13, 14, 15 not concerned by said permanent parking braking action;
- at the end of the parking, releasing said permanent parking-braking action F2 with said at least one of said at least two electric motors RI, RE, LI, LE, 12, 13, 14, 15 until said temporary parking braking action F1 is achieved; and thus
- releasing said temporary parking braking action F1 with said at least two electric motors RI, RE, LI, LE, 12, 13, 14, 15.

**.** The person skilled in the art may make many changes and adaptations to the embodiments of the parking-braking assembly described above to satisfy contingent needs without however departing from the scope of the appended claims.

### REFERENCES

- 1: braking system
- 2: vehicle
- 3: rear wheel
- 4: front wheel
- 5: rear axle
- 6: front axle
- 10: rear axle first electro-actuated brake caliper
- 11: rear axle further first electro-actuated brake caliper
- 12: front caliper electric motor
- 13: front caliper electric motor
- 14: front caliper further electric motor
- 15: front caliper further electric motor
- 20: front axle second electro-actuated brake caliper
- 21: front axle further second electro-actuated brake caliper
- 30: electronic device
- 50: electronic control unit
- 60: reducer
- 61: piston
- 62: brake pad
- 63: braking surface
- 64: brake disc
- 100: parking brake apparatus
- 200: hydraulic and electromechanical service and parking disc brake
- 101: monobloc brake caliper
- 102: side wall
- 103: disc space
- 104: brake disc
- 105: pads
- 106: service braking system
- 107: hydraulic actuator
- 108: hydraulic cylinder
- 109: piston
- 110: free end
- 111: hydraulic fluid supply and pressurization system
- 112: actuating direction
- 113: parking braking system
- 114: electro-mechanical actuator
- 115: screw-nut assembly translational member
- 116: screw-nut assembly rotary member
- 117: electric motor
- 118: power supply
- 119: transmission mechanism
- 120: electronic control unit
- 121: user interface
- 122: service brake control interface
- 123: parking brake control interface
- IN1: first input
- IN2: second input
- S1: first electric signal
- S2: second electric signal
- CP1: first power circuit
- CP2: second power circuit
- OU1: first output
- OU1': further first output
- OU2: second output
- OU2': further second output
- RI: first rear caliper first electric motor
- RE: first rear caliper further first electric motor
- LE: second rear caliper second electric motor
- LI: second rear caliper further second electric motor
- SW1: electrical connection means, first switch controlled in switching
- SW2: electrical connection means, second switch controlled in switching
- SW3: electrical connection means, third switch controlled in switching
- SW4: electrical connection means, fourth switch controlled in switching
- EN1: first control signal
- EN2: second control signal
- T1: first time interval
- T2: second time interval

## Claims

1. A parking-braking assembly (1) of a vehicle (2), comprising:
at least one first brake caliper (10) associated with a wheel (3) of the rear axle (5) of said vehicle (2);
at least one further first brake caliper (11) associated with a wheel (4) of the front axle (6) of said vehicle (2); wherein
all the brake calipers (10, 11, 20, 21) of the braking system (1) of the vehicle (2) are electro-actuated brake calipers to avoid hydraulic braking devices and circuits on the vehicle (2); an electronic control unit (50);
**wherein**
both said brake caliper (10) and said further first brake caliper (11) are at least also parking brake calipers;
the parking-brake assembly being **characterized in that** both of said calipers (10, 11, 20, 21) comprise each at least two electric motors (RI, RE, LE, LI, 12, 13, 14, 15); and wherein both said at least two electric motors (RI, RE, LE, LI, 12, 13, 14, 15) generate an at least temporary parking action of the vehicle (2);
and wherein **in that** said electronic control unit (50) is configured to:
• Apply an at least temporary parking braking action by controlling both said at least two electric motors of each of said caliper (10, 11); and subsequently
• Apply a permanent parking braking action by controlling at least one of said at least two electric motors of each of said calipers (10, 11).

2. A parking-braking assembly (1) according to claim 1, wherein said system (1) comprises an electronic control unit (50) configured to generate a first (S1) and a second (S2) electrical parking command signal to actuate said electro-actuated brake calipers (10, 11, 20, 21);
and/or wherein
said electro-actuated brake calipers (10, 11, 20, 21) and/or said electronic control unit (50) are configured to apply a constant parking action on the vehicle (2) also when the vehicle is parked; and/or wherein
said electro-actuated brake calipers (10, 11, 20, 21) and/or said electronic control unit (50) are configured to apply a constant parking action on the vehicle (2) also when the vehicle is parked and off;
and/or wherein
each electro-actuated caliper (10, 11, 20, 21) comprises at least one electric motor (RI, RE, LE, LI, 12, 13, 14, 15) which acts, either directly or by means of a reduction gear (60), on a piston (61) which biases a brake pad (62), which, during the braking action, abuts against a braking surface (63) of a brake disc (64); and wherein
alternatively,
said at least one electric motor (RI, RE, LE, LI, 12, 13, 14, 15) comprises a motor locking device (65) which acts by blocking the movement of the electric motor when the electric motor (RI, RE, LE, LI, 12, 13, 14, 15) is not powered when the vehicle (2) is stopped;
or
said reducer (60) is an irreversible reducer, i.e. it allows a movement of the piston (61) if actuated by the electric motor (RI, RE, LE, LI, 12, 13, 14, 15), but it does not allow the piston (61) to retract with the sole bias of the brake pad (62) on which said piston acts.

3. A parking-braking assembly (1) according to claim 1 or 2, wherein
at least one second brake caliper (20) is associated with a wheel (3) of the rear axle (5) of said vehicle (2); and wherein
at least one further second brake caliper (21) is associated with a wheel (4) of the front axle (6) of said vehicle (2); and wherein all four brake calipers (10, 11, 20, 21) of the braking system (1) of the vehicle (2) are electro-actuated brake calipers;
and wherein
at least one electro-actuated brake caliper (10 or 11) of said rear axle (5) and
at least one electro-actuated brake caliper (21 or 21) of said front axle (6)
are at least also parking brake calipers of the vehicle (2); and/or wherein
at least two electro-actuated brake calipers (10 or 11) of said rear axle (5) and
at least two electro-actuated brake calipers (21 or 21) of said front axle (6)
are at least also parking brake calipers of the vehicle (2).

4. A parking-braking assembly (1) according to any one of the preceding claims, wherein
at least one electro-actuated caliper (10, 11, 20, 21) comprises at least two electric motors (RI, RE, LE, LI, 12, 13, 14, 15); and wherein
at least one of said at least two electric motors (RI, RE, LE, LI, 12, 13, 14, 15) generates a parking action of the vehicle (2);
and/or wherein
said rear axle (5) comprises two opposite rear wheels (3) and each rear wheel (3) cooperates with at least one rear axle electro-actuated caliper (10, 11); and wherein
each of said electro-actuated calipers (10, 11) comprises at least two electric motors (RI, RE, LE, LI); and wherein
at least one of said at least two electric motors (RI, RE, LE, LI) of each of said electro-actuated calipers (10, 11) generates a parking action of the vehicle (2);
and/or wherein
said front axle (6) comprises two opposite rear wheels (4) and each front wheel (4) cooperates with at least one front axle electro-actuated caliper (20, 21); and wherein
each of said electro-actuated calipers (20, 21) comprises at least two electric motors (12, 13, 14, 15); and wherein
at least one of said at least two electric motors (12, 13, 14, 15) of each of said electro-actuated calipers (20, 21) generates a parking action of the vehicle (2).

5. A parking-braking assembly (1) according to any one of the preceding claims, wherein
said front axle (6) comprises two opposite rear wheels (4) and each front wheel (4) cooperates with at least one front axle electro-actuated caliper (20, 21); and wherein
each of said electro-actuated calipers (20, 21) comprises at least two electric motors (12, 13, 14, 15); and wherein
both said at least two electric motors (12, 13, 14, 15) of each of the said electro-actuated calipers (20, 21) generate an at least temporary parking action of the vehicle (2);
and/or wherein
said rear axle (5) comprises two opposite rear wheels (3) and each rear wheel (3) cooperates with at least one rear axle electro-actuated caliper (10, 11); and wherein
each of said electro-actuated calipers (10, 11) comprises at least two electric motors (RI, RE, LE, LI); and wherein
both said at least two electric motors (RI, RE, LE, LI) of each of said electro-actuated calipers (10, 11) generates an at least temporary parking action of the vehicle (2);

6. A parking-braking assembly (1) according to any one of the preceding claims, wherein
said front axle (6) comprises two opposite rear wheels (4) and each front wheel (4) cooperates with at least one front axle electro-actuated caliper (20, 21); and wherein
said front axle electro-actuated calipers (20, 21) are floating calipers; and wherein
said front axle electro-actuated calipers (20, 21) each comprise two electric motors (12, 13, 14, 15); and wherein
at least one of said at least two electric motors (12, 13, 14, 15) of each of said electro-actuated calipers (20, 21) generates a parking action of the vehicle (2);
and/or wherein
said front axle (6) comprises two opposite rear wheels (4) and each front wheel (4) cooperates with at least one front axle electro-actuated caliper (20, 21); and wherein
said front axle electro-actuated calipers (20, 21) are monoblock or fixed calipers; and wherein
said front axle electro-actuated calipers (20, 21) each comprise two opposed pairs of electric motors (12, 13, 14, 15); and wherein at least two of said electric motors (12, 13, 14, 15), arranged opposite to each other, of each of said electro-actuated calipers (20, 21) generates a parking action of the vehicle (2);
and/or wherein
said rear axle (5) comprises two opposite rear wheels (3) and each rear wheel (3) cooperates with at least one rear axle electro-actuated caliper (10, 11); and wherein
said rear axle electro-actuated calipers (10, 11) are floating calipers; and wherein
said rear axle electro-actuated calipers (10, 11) each comprise a single electric motor (RI, RE, LE, LI); and wherein
said electric motor (RI, RE, LE, LI) of each of said electro-operated calipers (10, 11) generates a parking action of the vehicle (2).

7. A parking braking method of a vehicle (2) comprising the steps of:
- providing at least one electro-actuated first brake caliper (10) associated with a wheel (3) of the rear axle (5) of said vehicle (2);
- providing at least one further electro-actuated first brake caliper (11) associated with a wheel (4) of the front axle (6) of said vehicle (2);
wherein it comprises the step of:
- applying a parking-braking action with both said brake caliper (10) and said further first brake caliper (11) to generate a parking-braking action to said vehicle (2)
**characterized by** the further steps of: of:
- providing at least two electric motors (RI, RE, LI, LE, 12, 13, 14, 15) for each electro-actuated caliper (10, 11, 20, 21);
- applying an at least temporary parking-braking action with said at least two electric motors (RI, RE, LI, LE, 12, 13, 14, 15);
- applying a permanent parking-braking action, i.e. until it is deactivated by the user, with at least one of said at least two electric motors (RI, RE, LI, LE, 12, 13, 14, 15) to generate a parking-braking action to said vehicle (2).

8. A method according to claim 7, wherein the further steps are provided:
- providing two opposite rear wheels (4) in said front axle (6), wherein each front wheel (4) cooperates with at least one front axle electro-actuated caliper (20, 21);
- providing two opposite rear wheels (3) in said rear axle (6), wherein each rear wheel (3) cooperates with at least one rear axle electro-actuated caliper (10, 11);
- applying a parking-braking action with all the electro-actuated calipers (20, 21) on the front axle and all the electro-actuated calipers (10, 11) on the rear axle.

9. A method according to claim 7 or 8, wherein the further steps are provided of:
- providing at least two electric motors (RI, RE, LI, LE, 12, 13, 14, 15) for each electro-actuated caliper (10, 11, 20, 21);
- applying a parking-braking action with at least one of said at least two electric motors (RI, RE, LI, LE, 12, 13, 14, 15) to generate a parking-braking action to said vehicle (2).

10. A method according to claim 7 or 8, wherein the further steps are provided of:
- providing at least two electric motors (RI, RE, LI, LE, 12, 13, 14, 15) for each electro-actuated caliper (10, 11, 20, 21);
- applying an at least temporary parking-braking action with said at least two electric motors (RI, RE, LI, LE, 12, 13, 14, 15);
- applying a permanent parking-braking action, i.e. until it is deactivated by the user, with at least one of said at least two electric motors (RI, RE, LI, LE, 12, 13, 14, 15) to generate a parking-braking action to said vehicle (2);
- releasing the temporary parking braking action only from electric motors (RI, RE, LI, LE, 12, 13, 14, 15) not concerned by said permanent parking braking action;
and/or wherein
- defining a first entity of a temporary braking action (F1);
- defining a second entity of a permanent braking action (F2);
- providing at least two electric motors (RI, RE, LI, LE, 12, 13, 14, 15) for at least one electro-actuated caliper (10, 11, 20, 21);
- applying said temporary parking-braking action (F1) with said at least two electric motors (RI, RE, LI, LE, 12, 13, 14, 15);
- applying said permanent parking-braking action (F2), i.e. until it is deactivated by the user, with at least one of said at least two electric motors (RI, RE, LI, LE, 12, 13, 14, 15) to generate a parking-braking action to said vehicle (2);
- releasing the temporary parking braking action (F1) only from electric motors (RI, RE, LI, LE, 12, 13, 14, 15) not concerned by said permanent parking braking action;
and/or wherein
- defining a first entity of a temporary braking action (F1);
- defining a second entity of a permanent braking action (F2);
- wherein said first entity of a temporary braking action (F1) is defined as equal to half the second entity of a permanent braking action (F2).
- providing at least two electric motors (RI, RE, LI, LE, 12, 13, 14, 15) for at least one electro-actuated caliper (10, 11, 20, 21);
- applying said temporary parking-braking action (F1) with said at least two electric motors (RI, RE, LI, LE, 12, 13, 14, 15);
- applying said permanent parking-braking action (F2), i.e. until it is deactivated by the user, with at least one of said at least two electric motors (RI, RE, LI, LE, 12, 13, 14, 15) to generate a parking-braking action to said vehicle (2);
- releasing the temporary parking braking action (F1) only from electric motors (RI, RE, LI, LE, 12, 13, 14, 15) not concerned by said permanent parking braking action;
and/or wherein
- defining a first entity of a temporary braking action (F1);
- defining a second entity of a permanent braking action (F2);
- providing at least two electric motors (RI, RE, LI, LE, 12, 13, 14, 15) for at least one electro-actuated caliper (10, 11, 20, 21);
- applying said temporary parking-braking action (F1) with said at least two electric motors (RI, RE, LI, LE, 12, 13, 14, 15);
- applying said permanent parking-braking action (F2), i.e. until it is deactivated by the user, with at least one of said at least two electric motors (RI, RE, LI, LE, 12, 13, 14, 15) to generate a parking-braking action to said vehicle (2);
- releasing the temporary parking braking action (F1) only from electric motors (RI, RE, LI, LE, 12, 13, 14, 15) not concerned by said permanent parking braking action;
- at the end of parking, releasing said permanent parking-braking action (F2) with said at least one of said at least two electric motors (RI, RE, LI, LE, 12, 13, 14, 15) until said temporary parking braking action (F1) is achieved; and then
- releasing said temporary parking braking action (F1) with said at least two electric motors (RI, RE, LI, LE, 12, 13, 14, 15).

## Patentansprüche

1. Feststellbremsanordnung (1) eines Fahrzeugs (2), umfassend:
mindestens einen ersten Bremssattel (10), der einem Rad (3) der Hinterachse (5) des Fahrzeugs (2) zugeordnet ist;
mindestens einen weiteren ersten Bremssattel (20, 21), der einem Rad (4) der Vorderachse (6) des Fahrzeugs (2) zugeordnet ist; wobei alle Bremssättel (10, 11, 20, 21) des Bremssystems (1) des Fahrzeugs (2) elektrisch betätigte Bremssättel sind, um hydraulische Bremsvorrichtungen und -kreise am Fahrzeug (2) zu vermeiden; eine elektronische Steuereinheit (50);
**wobei**
sowohl der Bremssattel (10) als auch der weitere erste Bremssattel (11) zumindest auch Feststellbremssättel sind;
wobei die Feststellbremsanordnung **dadurch gekennzeichnet ist, dass** beide der Bremssättel (10, 11, 20, 21) jeweils mindestens zwei Elektromotoren (RI, RE, LE, LI, 12, 13, 14, 15) umfassen;
und wobei die beiden mindestens zwei Elektromotoren (RI, RE, LE, LI, 12, 13, 14, 15) eine zumindest vorübergehende Feststellbremswirkung des Fahrzeugs (2) erzeugen;
und wobei die elektronische Steuereinheit (50) konfiguriert ist zum:
- Aufbringen einer zumindest vorübergehenden Feststellbremswirkung durch Steuern beider der mindestens zwei Elektromotoren jedes der Bremssättel (10, 11); und anschließendes
- Aufbringen einer permanenten Feststellbremswirkung durch Steuern mindestens eines der mindestens zwei Elektromotoren jedes der Bremssättel (10, 11).

2. Feststellbremsanordnung (1) nach Anspruch 1, wobei das System (1) eine elektronische Steuereinheit (50) umfasst, die dazu konfiguriert ist, ein erstes (S1) und ein zweites (S2) elektrisches Feststellbremsbefehlssignal zu erzeugen, um die elektrisch betätigten Bremssättel (10, 11, 20, 21) zu betätigen;
und/oder wobei
die elektrisch betätigten Bremssättel (10, 11, 20, 21) und/oder die elektronische Steuereinheit (50) dazu konfiguriert sind, auch dann eine konstante Feststellbremswirkung auf das Fahrzeug (2) aufzubringen, wenn das Fahrzeug geparkt ist; und/oder wobei die elektrisch betätigten Bremssättel (10, 11, 20, 21) und/oder die elektronische Steuereinheit (50) dazu konfiguriert sind, auch dann eine konstante Feststellbremswirkung auf das Fahrzeug (2) aufzubringen, wenn das Fahrzeug geparkt und abgeschaltet ist;
und/oder wobei
jeder elektrisch betätigte Bremssattel (10, 11, 20, 21) mindestens einen Elektromotor (RI, RE, LE, LI, 12, 13, 14, 15) umfasst, der entweder direkt oder mittels eines Untersetzungsgetriebes (60) auf einen Kolben (61) einwirkt, der einen Bremsbelag (62) vorspannt, der während der Bremswirkung an einer Bremsfläche (63) einer Bremsscheibe (64) anliegt; und wobei
alternativ
der mindestens eine Elektromotor (RI, RE, LE, LI, 12, 13, 14, 15) eine Motorsperrvorrichtung (65) umfasst, die wirkt, indem sie die Bewegung des Elektromotors blockiert, wenn der Elektromotor (RI, RE, LE, LI, 12, 13, 14, 15) bei angehaltenem Fahrzeug (2) nicht mit Strom versorgt wird;
oder
das Untersetzungsgetriebe (60) ein nicht umkehrbares Untersetzungsgetriebe ist, d. h., es ermöglicht eine Bewegung des Kolbens (61), wenn es durch den Elektromotor (RI, RE, LE, LI, 12, 13, 14, 15) betätigt wird, ermöglicht jedoch kein Zurückziehen des Kolbens (61) allein durch die Vorspannung des Bremsbelags (62), auf den der Kolben einwirkt.

3. Feststellbremsanordnung (1) nach Anspruch 1 oder 2, wobei mindestens ein zweiter Bremssattel (10, 11) einem Rad (3) der Hinterachse (5) des Fahrzeugs (2) zugeordnet ist; und wobei mindestens ein weiterer zweiter Bremssattel (21) einem Rad (4) der Vorderachse (6) des Fahrzeugs (2) zugeordnet ist; und wobei alle vier Bremssättel (10, 11, 20, 21) des Bremssystems (1) des Fahrzeugs (2) elektrisch betätigte Bremssättel sind;
und wobei
mindestens ein elektrisch betätigter Bremssattel (10 oder 11) der Hinterachse (5) und
mindestens ein elektrisch betätigter Bremssattel (21 oder 21) der Vorderachse (6)
zumindest auch Feststellbremssättel des Fahrzeugs (2) sind; und/oder wobei
mindestens zwei elektrisch betätigte Bremssättel (10 oder 11) der Hinterachse (5) und
mindestens zwei elektrisch betätigte Bremssättel (21 oder 21) der Vorderachse (6)
zumindest auch Feststellbremssättel des Fahrzeugs (2) sind.

4. Feststellbremsanordnung (1) nach einem der vorhergehenden Ansprüche, wobei
mindestens ein elektrisch betätigter Bremssattel (10, 11, 20, 21) mindestens zwei Elektromotoren (RI, RE, LE, LI, 12, 13, 14, 15) umfasst; und wobei
mindestens einer der mindestens zwei Elektromotoren (RI, RE, LE, LI, 12, 13, 14, 15) eine Feststellbremswirkung des Fahrzeugs (2) erzeugt;
und/oder wobei
die Hinterachse (5) zwei gegenüberliegende Hinterräder (3) umfasst und jedes Hinterrad (3) mit mindestens einem elektrisch betätigten Hinterachsenbremssattel (10, 11) zusammenwirkt; und wobei
jeder der elektrisch betätigten Bremssättel (10, 11) mindestens zwei Elektromotoren (RI, RE, LE, LI) umfasst; und wobei
mindestens einer der mindestens zwei Elektromotoren (RI, RE, LE, LI) jeder der elektrisch betätigten Bremssättel (10, 11) eine Feststellbremswirkung des Fahrzeugs (2) erzeugt;
und/oder wobei
die Vorderachse (6) zwei gegenüberliegende Vorderrädern (4) umfasst und jedes Vorderrad (4) mit mindestens einem elektrisch betätigten Vorderachsenbremssattel (20, 21) zusammenwirkt; und wobei
jeder der elektrisch betätigten Bremssättel (20, 21) mindestens zwei Elektromotoren (12, 13, 14, 15) umfasst; und wobei
mindestens einer der mindestens zwei Elektromotoren (12, 13, 14, 15) jedes der elektrisch betätigten Bremssättel (20, 21) eine Feststellbremswirkung des Fahrzeugs (2) erzeugt.

5. Feststellbremsanordnung (1) nach einem der vorhergehenden Ansprüche, wobei
die Vorderachse (6) zwei gegenüberliegende Vorderrädern (4) umfasst und jedes Vorderrad (4) mit mindestens einem elektrisch betätigten Vorderachsenbremssattel (20, 21) zusammenwirkt; und wobei
jeder der elektrisch betätigten Bremssättel (20, 21) mindestens zwei Elektromotoren (12, 13, 14, 15) umfasst; und wobei
beide der mindestens zwei Elektromotoren (12, 13, 14, 15) jedes der elektrisch betätigten Bremssättel (20, 21) eine zumindest vorübergehende Feststellbremswirkung des Fahrzeugs (2) erzeugen;
und/oder wobei
die Hinterachse (5) zwei gegenüberliegende Hinterräder (3) umfasst und jedes Hinterrad (3) mit mindestens einem elektrisch betätigten Hinterachsenbremssattel (10, 11) zusammenwirkt; und wobei
jeder der elektrisch betätigten Bremssättel (10, 11) mindestens zwei Elektromotoren (RI, RE, LE, LI) umfasst; und wobei
beide der mindestens zwei Elektromotoren (RI, RE, LE, LI) jedes der elektrisch betätigten Bremssättel (10, 11) eine zumindest vorübergehende Feststellbremswirkung des Fahrzeugs (2) erzeugen.

6. Feststellbremsanordnung (1) nach einem der vorhergehenden Ansprüche, wobei
die Vorderachse (6) zwei gegenüberliegende Vorderrädern (4) umfasst und jedes Vorderrad (4) mit mindestens einem elektrisch betätigten Vorderachsenbremssattel (20, 21) zusammenwirkt; und wobei
die elektrisch betätigten Vorderachsenbremssättel (20, 21) schwimmende Bremssättel sind; und wobei
die elektrisch betätigten Vorderachsenbremssättel (20, 21) jeweils zwei Elektromotoren (12, 13, 14, 15) umfassen; und wobei
mindestens einer der mindestens zwei Elektromotoren (12, 13, 14, 15) jeder der elektrisch betätigten Bremssättel (20, 21) eine Feststellbremswirkung des Fahrzeugs (2) erzeugt;
und/oder wobei
die Vorderachse (6) zwei gegenüberliegende Vorderrädern (4) umfasst und jedes Vorderrad (4) mit mindestens einem elektrisch betätigten Vorderachsenbremssattel (20, 21) zusammenwirkt; und wobei
die elektrisch betätigten Vorderachsenbremssättel (20, 21) Monoblock- oder Festbremssättel sind; und wobei die elektrisch betätigten Vorderachsenbremssättel (20, 21) jeweils zwei gegenüberliegende Paare von Elektromotoren (12, 13, 14, 15) umfassen; und wobei mindestens zwei der Elektromotoren (12, 13, 14, 15), die einander gegenüberliegend angeordnet sind, von jedem der elektrisch betätigten Bremssättel (20, 21) eine Feststellbremswirkung des Fahrzeugs (2) erzeugen;
und/oder wobei
die Hinterachse (5) zwei gegenüberliegende Hinterräder (3) umfasst und jedes Hinterrad (3) mit mindestens einem elektrisch betätigten Hinterachsenbremssattel (10, 11) zusammenwirkt; und wobei
die elektrisch betätigten Hinterachsenbremssättel (10, 11) schwimmende Bremssättel sind; und wobei
die elektrisch betätigten Hinterachsenbremssättel (10, 11) jeweils einen einzelnen Elektromotor (RI, RE, LE, LI) umfassen; und wobei
der Elektromotor (RI, RE, LE, LI) jedes der elektrisch betriebenen Bremssättel (10, 11) eine Feststellbremswirkung des Fahrzeugs (2) erzeugt.

7. Feststellbremsverfahren eines Fahrzeugs (2), das die Schritte umfasst:
- Bereitstellen mindestens eines elektrisch betätigten ersten Bremssattels (10), der einem Rad (3) der Hinterachse (5) des Fahrzeugs (2) zugeordnet ist;
- Bereitstellen mindestens eines weiteren elektrisch betätigten ersten Bremssattels (20, 21), der einem Rad (4) der Vorderachse (6) des Fahrzeugs (2) zugeordnet ist;
wobei es den Schritt umfasst:
- Aufbringen einer Feststellbremswirkung sowohl mit dem Bremssattel (10) als auch mit dem weiteren ersten Bremssattel (20, 21), um eine Feststellbremswirkung an dem Fahrzeug (2) zu erzeugen, **gekennzeichnet durch** die folgenden weiteren Schritte:
- Bereitstellen von mindestens zwei Elektromotoren (RI, RE, LI, LE, 12, 13, 14, 15) für jeden elektrisch betätigten Bremssattel (10, 11, 20, 21);
- Aufbringen einer zumindest vorübergehenden Feststellbremswirkung mit den mindestens zwei Elektromotoren (RI, RE, LI, LE, 12, 13, 14, 15);
- Aufbringen einer permanenten Feststellbremswirkung, d. h., bis diese vom Benutzer deaktiviert wird, mit mindestens einem der mindestens zwei Elektromotoren (RI, RE, LI, LE, 12, 13, 14, 15), um eine Feststellbremswirkung an dem Fahrzeug (2) zu erzeugen.

8. Verfahren nach Anspruch 7, wobei die weiteren Schritte vorgesehen sind:
- Bereitstellen von zwei gegenüberliegenden Vorderrädern (4) an der Vorderachse (6), wobei jedes Vorderrad (4) mit mindestens einem elektrisch betätigten Vorderachsenbremssattel (20, 21) zusammenwirkt;
- Bereitstellen von zwei gegenüberliegenden Hinterrädern (3) an der Hinterachse (5), wobei jedes Hinterrad (3) mit mindestens einem elektrisch betätigten Hinterachsenbremssattel (10, 11) zusammenwirkt;
- Aufbringen einer Feststellbremswirkung mit allen elektrisch betätigten Bremssätteln (20, 21) an der Vorderachse und allen elektrisch betätigten Bremssätteln (10, 11) an der Hinterachse.

9. Verfahren nach Anspruch 7 oder 8, wobei die weiteren Schritte vorgesehen sind:
- Bereitstellen von mindestens zwei Elektromotoren (RI, RE, LI, LE, 12, 13, 14, 15) für jeden elektrisch betätigten Bremssattel (10, 11, 20, 21);
- Aufbringen einer Feststellbremswirkung mit mindestens einem der mindestens zwei Elektromotoren (RI, RE, LI, LE, 12, 13, 14, 15), um eine Feststellbremswirkung an dem Fahrzeug (2) zu erzeugen.

10. Verfahren nach Anspruch 7 oder 8, wobei die weiteren Schritte vorgesehen sind:
- Bereitstellen von mindestens zwei Elektromotoren (RI, RE, LI, LE, 12, 13, 14, 15) für jeden elektrisch betätigten Bremssattel (10, 11, 20, 21);
- Aufbringen einer zumindest vorübergehenden Feststellbremswirkung mit den mindestens zwei Elektromotoren (RI, RE, LI, LE, 12, 13, 14, 15);
- Aufbringen einer permanenten Feststellbremswirkung, d. h., bis diese vom Benutzer deaktiviert wird, mit mindestens einem der mindestens zwei Elektromotoren (RI, RE, LI, LE, 12, 13, 14, 15), um eine Feststellbremswirkung an dem Fahrzeug (2) zu erzeugen;
- Aufheben der vorübergehenden Feststellbremswirkung ausschließlich von Elektromotoren (RI, RE, LI, LE, 12, 13, 14, 15), die nicht von der permanenten Feststellbremswirkung betroffen sind;
und/oder wobei
- eine erste Größe einer vorübergehenden Bremswirkung (F1) definiert wird;
- eine zweite Größe einer permanenten Bremswirkung (F2) definiert wird;
- mindestens zwei Elektromotoren (RI, RE, LI, LE, 12, 13, 14, 15) für mindestens einen elektrisch betätigten Bremssattel (10, 11, 20, 21) bereitgestellt werden;
- die vorübergehende Feststellbremswirkung (F1) mit den mindestens zwei Elektromotoren (RI, RE, LI, LE, 12, 13, 14, 15) aufgebracht wird;
- die permanente Feststellbremswirkung (F2), d. h., bis diese vom Benutzer deaktiviert wird, mit mindestens einem der mindestens zwei Elektromotoren (RI, RE, LI, LE, 12, 13, 14, 15) aufgebracht wird, um eine Feststellbremswirkung an dem Fahrzeug (2) zu erzeugen;
- die vorübergehende Feststellbremswirkung (F1) ausschließlich von Elektromotoren (RI, RE, LI, LE, 12, 13, 14, 15) aufgehoben wird, die nicht von der permanenten Feststellbremswirkung betroffen sind;
und/oder wobei
- eine erste Größe einer vorübergehenden Bremswirkung (F1) definiert wird;
- eine zweite Größe einer permanenten Bremswirkung (F2) definiert wird;
- wobei die erste Größe für eine vorübergehende Bremswirkung (F1) als gleich der Hälfte der zweiten Größe für eine permanente Bremswirkung (F2) definiert ist;
- mindestens zwei Elektromotoren (RI, RE, LI, LE, 12, 13, 14, 15) für mindestens einen elektrisch betätigten Bremssattel (10, 11, 20, 21) bereitgestellt werden;
- die vorübergehende Feststellbremswirkung (F1) mit den mindestens zwei Elektromotoren (RI, RE, LI, LE, 12, 13, 14, 15) aufgebracht wird;
- die permanente Feststellbremswirkung (F2), d. h., bis diese vom Benutzer deaktiviert wird, mit mindestens einem der mindestens zwei Elektromotoren (RI, RE, LI, LE, 12, 13, 14, 15) aufgebracht wird, um eine Feststellbremswirkung an dem Fahrzeug (2) zu erzeugen;
- die vorübergehende Feststellbremswirkung (F1) ausschließlich von Elektromotoren (RI, RE, LI, LE, 12, 13, 14, 15) aufgehoben wird, die nicht von der permanenten Feststellbremswirkung betroffen sind;
und/oder wobei
- eine erste Größe einer vorübergehenden Bremswirkung (F1) definiert wird;
- eine zweite Größe einer permanenten Bremswirkung (F2) definiert wird;
- mindestens zwei Elektromotoren (RI, RE, LI, LE, 12, 13, 14, 15) für mindestens einen elektrisch betätigten Bremssattel (10, 11, 20, 21) bereitgestellt werden;
- die vorübergehende Feststellbremswirkung (F1) mit den mindestens zwei Elektromotoren (RI, RE, LI, LE, 12, 13, 14, 15) aufgebracht wird;
- die permanente Feststellbremswirkung (F2), d. h., bis diese vom Benutzer deaktiviert wird, mit mindestens einem der mindestens zwei Elektromotoren (RI, RE, LI, LE, 12, 13, 14, 15) aufgebracht wird, um eine Feststellbremswirkung an dem Fahrzeug (2) zu erzeugen;
- die vorübergehende Feststellbremswirkung (F1) ausschließlich von Elektromotoren (RI, RE, LI, LE, 12, 13, 14, 15) aufgehoben wird, die nicht von der permanenten Feststellbremswirkung betroffen sind;
- am Ende des Parkvorgangs die permanente Feststellbremswirkung (F2) mit dem mindestens einen der mindestens zwei Elektromotoren (RI, RE, LI, LE, 12, 13, 14, 15) aufgehoben wird, bis die vorübergehende Feststellbremswirkung (F1) erreicht ist; und anschließend
- die vorübergehende Feststellbremswirkung (F1) mit den mindestens zwei Elektromotoren (RI, RE, LI, LE, 12, 13, 14, 15) aufgehoben wird.

## Revendications

1. Ensemble de freinage de stationnement (1) d'un véhicule (2), comprenant : au moins un premier étrier de frein (10) associé à une roue (3) de l'essieu arrière (5) dudit véhicule (2) ;
au moins un autre premier étrier de frein (20, 21) associé à une roue (4) de l'essieu avant (6) dudit véhicule (2) ; dans lequel tous les étriers de frein (10, 11, 20, 21) du système de freinage (1) du véhicule (2) sont des étriers de frein à actionnement électrique pour éviter les dispositifs et circuits de freinage hydraulique sur le véhicule (2) ; une unité de commande électronique (50) ;
**dans lequel**
à la fois ledit étrier de frein (10) et ledit autre premier étrier de frein (11) sont au moins également des étriers de frein de stationnement ;
l'ensemble de freinage de stationnement étant **caractérisé en ce que** les deux desdits étriers (10, 11, 20, 21) comprennent chacun au moins deux moteurs électriques (RI, RE, LE, LI, 12, 13, 14, 15) ; et dans lequel à la fois lesdits au moins deux moteurs électriques (RI, RE, LE, LI, 12, 13, 14, 15) génèrent une action de stationnement au moins temporaire du véhicule (2) ;
et dans lequel ladite unité de commande électronique (50) est configurée pour :
- appliquer une action de freinage de stationnement au moins temporaire en contrôlant à la fois lesdits au moins deux moteurs électriques de chacun desdits étriers (10, 11) ; et par la suite
- appliquer une action de freinage de stationnement permanent en commandant au moins un desdits au moins deux moteurs électriques de chacun desdits étriers (10, 11).

2. Ensemble de freinage de stationnement (1) selon la revendication 1, dans lequel ledit système (1) comprend une unité de commande électronique (50) configurée pour générer un premier (S1) et un deuxième (S2) signal de commande de stationnement électrique pour actionner lesdits étriers de frein à actionnement électrique (10, 11, 20, 21) ;
et/ou dans lequel
lesdits étriers de frein à actionnement électrique (10, 11, 20, 21) et/ou ladite unité de commande électronique (50) sont configurés pour appliquer une action de stationnement constante sur le véhicule (2) aussi lorsque le véhicule est stationné ;
et/ou dans lequel
lesdits étriers de frein à actionnement électrique (10, 11, 20, 21) et/ou ladite unité de commande électronique (50) sont configurés pour appliquer une action de stationnement constante sur le véhicule (2) aussi lorsque le véhicule est stationné et éteint ;
et/ou dans lequel
chaque étrier à actionnement électrique (10, 11, 20, 21) comprend au moins un moteur électrique (RI, RE, LE, LI, 12, 13, 14, 15) qui agit, soit directement, soit au moyen d'un réducteur (60), sur un piston (61) qui sollicite une plaquette de frein (62), qui, pendant l'action de freinage, bute contre une surface de freinage (63) d'un disque de frein (64) ; et dans lequel
alternativement,
ledit au moins un moteur électrique (RI, RE, LE, LI, 12, 13, 14, 15) comprend un dispositif de verrouillage de moteur (65) qui agit en bloquant le mouvement du moteur électrique lorsque le moteur électrique (RI, RE, LE, LI, 12, 13, 14, 15) n'est pas alimenté lorsque le véhicule (2) est arrêté ;
ou
ledit réducteur (60) est un réducteur irréversible, c'est-à-dire qu'il permet un mouvement du piston (61) s'il est actionné par le moteur électrique (RI, RE, LE, LI, 12, 13, 14, 15), mais il ne permet pas au piston (61) de se rétracter avec la seule sollicitation de la plaquette de frein (62) sur laquelle ledit piston agit.

3. Ensemble de freinage de stationnement (1) selon la revendication 1 ou 2, dans lequel
au moins un deuxième étrier de frein (10, 11) est associé à une roue (3) de l'essieu arrière (5) dudit véhicule (2) ; et dans lequel
au moins un autre deuxième étrier de frein (21) est associé à une roue (4) de l'essieu avant (6) dudit véhicule (2) ; et dans lequel les quatre étriers de frein (10, 11, 20, 21) du système de freinage (1) du véhicule (2) sont des étriers de frein à actionnement électrique ;
et dans lequel
au moins un étrier de frein à actionnement électrique (10 ou 11) dudit essieu arrière (5) et
au moins un étrier de frein à actionnement électrique (21 ou 21) dudit essieu avant (6)
sont au moins également des étriers de frein de stationnement du véhicule (2) ; et/ou dans lequel
au moins deux étriers de frein à actionnement électrique (10 ou 11) dudit essieu arrière (5) et
au moins deux étriers de frein à actionnement électrique (21 ou 21) dudit essieu avant (6)
sont au moins également des étriers de frein de stationnement du véhicule (2).

4. Ensemble de freinage de stationnement (1) selon l'une quelconque des revendications précédentes, dans lequel
au moins un étrier à actionnement électrique (10, 11, 20, 21) comprend au moins deux moteurs électriques (RI, RE, LE, LI, 12, 13, 14, 15) ; et dans lequel
au moins un desdits au moins deux moteurs électriques (RI, RE, LE, LI, 12, 13, 14, 15) génère une action de stationnement du véhicule (2) ;
et/ou dans lequel
ledit essieu arrière (5) comprend deux roues arrière opposées (3) et chaque roue arrière (3) coopère avec au moins un étrier à actionnement électrique (10, 11) de l'essieu arrière ; et dans lequel
chacun desdits étriers à actionnement électrique (10, 11) comprend au moins deux moteurs électriques (RI, RE, LE, LI) ;
et dans lequel
au moins un desdits au moins deux moteurs électriques (RI, RE, LE, LI) de chacun desdits étriers à actionnement électrique (10, 11) génère une action de stationnement du véhicule (2) ;
et/ou dans lequel
ledit essieu avant (6) comprend deux roues avant opposées (4) et chaque roue avant (4) coopère avec au moins un étrier à actionnement électrique (20, 21) de l'essieu avant ; et dans lequel
chacun desdits étriers à actionnement électrique (20, 21) comprend au moins deux moteurs électriques (12, 13, 14, 15) ; et dans lequel
au moins un desdits au moins deux moteurs électriques (12, 13, 14, 15) de chacun desdits étriers à actionnement électrique (20, 21) génère une action de stationnement du véhicule (2).

5. Ensemble de freinage de stationnement (1) selon l'une quelconque des revendications précédentes, dans lequel ledit essieu avant (6) comprend deux roues avant opposées (4) et chaque roue avant (4) coopère avec au moins un étrier à actionnement électrique (20, 21) de l'essieu avant ; et dans lequel
chacun desdits étriers à actionnement électrique (20, 21) comprend au moins deux moteurs électriques (12, 13, 14, 15) ; et dans lequel
à la fois lesdits au moins deux moteurs électriques (12, 13, 14, 15) de chacun desdits étriers à actionnement électrique (20, 21) génèrent une action de stationnement au moins temporaire du véhicule (2) ;
et/ou dans lequel
ledit essieu arrière (5) comprend deux roues arrière opposées (3) et chaque roue arrière (3) coopère avec au moins un étrier à actionnement électrique (10, 11) de l'essieu arrière ; et dans lequel
chacun desdits étriers à actionnement électrique (10, 11) comprend au moins deux moteurs électriques (RI, RE, LE, LI) ; et dans lequel
à la fois lesdits au moins deux moteurs électriques (RI, RE, LE, LI) de chacun desdits étriers à actionnement électrique (10, 11) génèrent une action de stationnement au moins temporaire du véhicule (2) ;

6. Ensemble de freinage de stationnement (1) selon l'une quelconque des revendications précédentes, dans lequel ledit essieu avant (6) comprend deux roues avant opposées (4) et chaque roue avant (4) coopère avec au moins un étrier à actionnement électrique (20, 21) de l'essieu avant ; et dans lequel
lesdits étriers à actionnement électrique d'essieu avant (20, 21) sont des étriers flottants ; et dans lequel
lesdits étriers à actionnement électrique d'essieu avant (20, 21) comprennent chacun deux moteurs électriques (12, 13, 14, 15) ; et dans lequel
au moins un desdits au moins deux moteurs électriques (12, 13, 14, 15) de chacun desdits étriers à actionnement électrique (20, 21) génère une action de stationnement du véhicule (2) ;
et/ou dans lequel
ledit essieu avant (6) comprend deux roues avant opposées (4) et chaque roue avant (4) coopère avec au moins un étrier à actionnement électrique (20, 21) de l'essieu avant ; et dans lequel
lesdits étriers à actionnement électrique d'essieu avant (20, 21) sont des étriers monoblocs ou fixes ; et dans lequel lesdits étriers à actionnement électrique d'essieu avant (20, 21) comprennent chacun deux paires opposées de moteurs électriques (12, 13, 14, 15) ; et dans lequel au moins deux desdits moteurs électriques (12, 13, 14, 15), disposés l'un en face de l'autre, de chacun desdits étriers à actionnement électrique (20, 21) génèrent une action de stationnement du véhicule (2) ;
et/ou dans lequel
ledit essieu arrière (5) comprend deux roues arrière opposées (3) et chaque roue arrière (3) coopère avec au moins un étrier à actionnement électrique (10, 11) de l'essieu arrière ; et dans lequel
lesdits étriers à actionnement électrique d'essieu arrière (10, 11) sont des étriers flottants ; et dans lequel
lesdits étriers à actionnement électrique d'essieu arrière (10, 11) comprennent chacun un seul moteur électrique (RI, RE, LE, LI) ; et dans lequel
ledit moteur électrique (RI, RE, LE, LI) de chacun desdits étriers à opération électrique (10, 11) génère une action de stationnement du véhicule (2).

7. Procédé de freinage de stationnement d'un véhicule (2) comprenant les étapes de :
- prévoir au moins un premier étrier de frein (10) à actionnement électrique associé à une roue (3) de l'essieu arrière (5) dudit véhicule (2) ;
- prévoir au moins un autre premier étrier de frein à actionnement électrique (20, 21) associé à une roue (4) de l'essieu avant (6) dudit véhicule (2) ;
dans lequel il comprend l'étape de :
- appliquer une action de freinage de stationnement avec à la fois ledit étrier de frein (10) et ledit autre premier étrier de frein (21, 20) pour générer une action de freinage de stationnement sur ledit véhicule (2) **caractérisée par** les autres étapes de :
- prévoir au moins deux moteurs électriques (RI, RE, LI, LE, 12, 13, 14, 15) pour chaque étrier à actionnement électrique (10, 11, 20, 21) ;
- appliquer une action de freinage de stationnement au moins temporaire avec lesdits au moins deux moteurs électriques (RI, RE, LI, LE, 12, 13, 14, 15) ;
- appliquer une action de freinage de stationnement permanent, c'est-à-dire jusqu'à ce qu'elle soit désactivée par l'utilisateur, avec au moins l'un desdits au moins deux moteurs électriques (RI, RE, LI, LE, 12, 13, 14, 15) pour générer une action de freinage de stationnement sur ledit véhicule (2).

8. Procédé selon la revendication 7, dans lequel les autres étapes sont prévues :
- prévoir deux roues avant opposées (4) dans ledit essieu avant (6), dans lequel chaque roue avant (4) coopère avec au moins un étrier à actionnement électrique (20, 21) de l'essieu avant ;
- prévoir deux roues arrière opposées (3) dans ledit essieu arrière (5), dans lequel chaque roue arrière (3) coopère avec au moins un étrier à actionnement électrique (10, 11) de l'essieu arrière ;
- appliquer une action de freinage de stationnement avec tous les étriers à actionnement électrique (20, 21) sur l'essieu avant et tous les étriers à actionnement électrique (10, 11) sur l'essieu arrière.

9. Procédé selon la revendication 7 ou 8, dans lequel les autres étapes sont prévues pour :
- prévoir au moins deux moteurs électriques (RI, RE, LI, LE, 12, 13, 14, 15) pour chaque étrier à actionnement électrique (10, 11, 20, 21) ;
- appliquer une action de freinage de stationnement avec au moins l'un desdits au moins deux moteurs électriques (RI, RE, LI, LE, 12, 13, 14, 15) pour générer une action de freinage de stationnement sur ledit véhicule (2).

10. Procédé selon la revendication 7 ou 8, dans lequel les autres étapes sont prévues pour :
- prévoir au moins deux moteurs électriques (RI, RE, LI, LE, 12, 13, 14, 15) pour chaque étrier à actionnement électrique (10, 11, 20, 21) ;
- appliquer une action de freinage de stationnement au moins temporaire avec lesdits au moins deux moteurs électriques (RI, RE, LI, LE, 12, 13, 14, 15) ;
- appliquer une action de freinage de stationnement permanent, c'est-à-dire jusqu'à ce qu'elle soit désactivée par l'utilisateur, avec au moins l'un desdits au moins deux moteurs électriques (RI, RE, LI, LE, 12, 13, 14, 15) pour générer une action de freinage de stationnement sur ledit véhicule (2) ;
- relâcher l'action de freinage de stationnement temporaire uniquement des moteurs électriques (RI, RE, LI, LE, 12, 13, 14, 15) non concernés par ladite action de freinage de stationnement permanent ;
et/ou dans lequel
- définir une première entité d'une action de freinage temporaire (F1) ;
- définir une deuxième entité d'action de freinage permanent (F2) ;
- prévoir au moins deux moteurs électriques (RI, RE, LI, LE, 12, 13, 14, 15) pour au moins un étrier à actionnement électrique (10, 11, 20, 21) ;
- appliquer ladite action de freinage de stationnement temporaire (F1) avec lesdits au moins deux moteurs électriques (RI, RE, LI, LE, 12, 13, 14, 15) ;
- appliquer ladite action de freinage de stationnement permanent (F2), c'est-à-dire jusqu'à ce qu'elle soit désactivée par l'utilisateur, avec au moins l'un desdits au moins deux moteurs électriques (RI, RE, LI, LE, 12, 13, 14, 15) pour générer une action de freinage de stationnement sur ledit véhicule (2) ;
- relâcher l'action temporaire de freinage de stationnement (F1) uniquement des moteurs électriques (RI, RE, LI, LE, 12, 13, 14, 15) non concernés par ladite action de freinage de stationnement permanent ;
et/ou dans lequel
- définir une première entité d'une action de freinage temporaire (F1) ;
- définir une deuxième entité d'action de freinage permanent (F2) ;
- dans lequel ladite première entité d'une action de freinage temporaire (F1) est définie comme étant égale à la moitié de la deuxième entité d'une action de freinage permanent (F2) ;
- prévoir au moins deux moteurs électriques (RI, RE, LI, LE, 12, 13, 14, 15) pour au moins un étrier à actionnement électrique (10, 11, 20, 21) ;
- appliquer ladite action de freinage de stationnement temporaire (F1) avec lesdits au moins deux moteurs électriques (RI, RE, LI, LE, 12, 13, 14, 15) ;
- appliquer ladite action de freinage de stationnement permanent (F2), c'est-à-dire jusqu'à ce qu'elle soit désactivée par l'utilisateur, avec au moins l'un desdits au moins deux moteurs électriques (RI, RE, LI, LE, 12, 13, 14, 15) pour générer une action de freinage de stationnement sur ledit véhicule (2) ;
- relâcher l'action temporaire de freinage de stationnement (F1) uniquement des moteurs électriques (RI, RE, LI, LE, 12, 13, 14, 15) non concernés par ladite action de freinage de stationnement permanent ;
et/ou dans lequel
- définir une première entité d'une action de freinage temporaire (F1) ;
- définir une deuxième entité d'action de freinage permanent (F2) ;
- prévoir au moins deux moteurs électriques (RI, RE, LI, LE, 12, 13, 14, 15) pour au moins un étrier à actionnement électrique (10, 11, 20, 21) ;
- appliquer ladite action de freinage de stationnement temporaire (F1) avec lesdits au moins deux moteurs électriques (RI, RE, LI, LE, 12, 13, 14, 15) ;
- appliquer ladite action de freinage de stationnement permanent (F2), c'est-à-dire jusqu'à ce qu'elle soit désactivée par l'utilisateur, avec au moins l'un desdits au moins deux moteurs électriques (RI, RE, LI, LE, 12, 13, 14, 15) pour générer une action de freinage de stationnement sur ledit véhicule (2) ;
- relâcher l'action temporaire de freinage de stationnement (F1) uniquement des moteurs électriques (RI, RE, LI, LE, 12, 13, 14, 15) non concernés par ladite action de freinage de stationnement permanent ;
- à la fin du stationnement, relâcher ladite action de freinage de stationnement permanent (F2) avec ledit au moins un desdits au moins deux moteurs électriques (RI, RE, LI, LE, 12, 13, 14, 15) jusqu'à ce que ladite action de freinage de stationnement temporaire (F1) soit réalisée ; puis
- relâcher ladite action de freinage de stationnement temporaire (F1) avec lesdits au moins deux moteurs électriques (RI, RE, LI, LE, 12, 13, 14, 15).
